(19) Europäisches Patentamt
European Patent Office
Office européen des brevets

(11) EP 3 379 835 A1

(12) **EUROPEAN PATENT APPLICATION**

(43) Date of publication:
**26.09.2018 Bulletin 2018/39**

(21) Application number: **17180276.2**

(22) Date of filing: **07.07.2017**

(51) Int Cl.:
***H04N 19/93*** *(2014.01)*
***H04N 19/463*** *(2014.01)*
***H04N 19/136*** *(2014.01)*
***H04N 19/593*** *(2014.01)*
***H04N 19/132*** *(2014.01)*
***H04N 19/182*** *(2014.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.03.2017 EP 17162866**

(71) Applicant: **Fraunhofer-Gesellschaft zur Förderung der angewandten Forschung e.V.**
**80686 München (DE)**

(72) Inventors:
- **Keinert, Joachim**
  **90425 Nürnberg (DE)**
- **Richter, Thomas**
  **12209 Berlin (DE)**
- **Thoma, Herbert**
  **91058 Erlangen (DE)**
- **Scherl, Christian**
  **91080 Uttenreuth (DE)**
- **de Frutos López, Manuel**
  **90409 Nürnberg (DE)**
- **Fößel, Siegfried**
  **91054 Erlangen (DE)**
- **Heppner, Wolfgang**
  **90402 Nürnberg (DE)**
- **Martinez del Amor, Miguel Angel**
  **90439 Nürnberg (DE)**
- **Wtjurin, Sergej**
  **90762 Fürth (DE)**

(74) Representative: **Schenk, Markus et al**
**Schoppe, Zimmermann, Stöckeler**
**Zinkler, Schenk & Partner mbB**
**Patentanwälte**
**Radlkoferstrasse 2**
**81373 München (DE)**

# (54) DECODER FOR DECODING IMAGE DATA FROM A DATA STREAM, ENCODER FOR ENCODING IMAGE DATA INTO A DATA STREAM, AND DATA STREAM COMPRISING IMAGE DATA AND DATA ON GREATEST CODED LINE INDEX VALUES

(57) The invention concerns a decoder (2) for decoding image data (4) from a data stream (6) comprising data (8) on coefficients (50, 51, 52, 53) obtained from a frequency transform of the image data (4) and comprising Greatest Coded Line Index (GCLI) values (10), each related to a coefficient group (54, 58) within a sequence of coefficient groups (54, 58). The decoder (2) comprises a decoding unit (12) for decoding the GCLI values (10) of the sequence of coefficient groups (54, 58). The decoder (2) further comprises an analyzer (14) for analyzing the GCLI value (10) of each $N^{th}$ coefficient group so as to determine a run (101, 102, 103) of coefficient groups (54, 58), wherein a run (101, 102, 103) starts at any one of the $N^{th}$ coefficient groups, wherein N is greater or equal than 2. According to the invention, the decoding unit (12) is configured to decode the data (8) on the coefficients (50, 51, 52, 53) being part of a run (101, 102, 103) by using an escape decoding mechanism and to decode the data (8) on coefficients (50, 51, 52, 53) not being part of a run (101, 102, 103) by using the GCLI values (10) in order to obtain the image data (4).

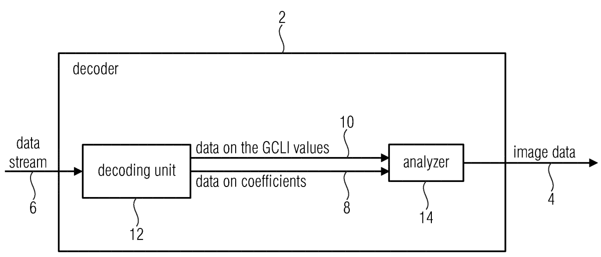


Fig. 2

EP 3 379 835 A1

Printed by Jouve, 75001 PARIS (FR)

## Description

This disclosure relates to a decoder for decoding image data from a data stream, an encoder for encoding image data into a data stream, and a data stream comprising image data and data on Greatest Coded Line Index (GCLI) values. Embodiments show spatially fixed zero-run coding for indicating the position of the most significant bit plane of a coefficient group.

Image and video compression typically applies a transform before running entropy coding. Reference [5], for instance, uses a block based prediction, while references [1], [2], [3] and [4] advocate for wavelet transforms. Such a wavelet transform is depicted in Fig. 1 exemplarily showing two vertical and four horizontal decompositions of the image. Thus, the image is decomposed into a number of subbands. As depicted in Fig. 1, the number of horizontal decompositions might be different from the number of vertical decompositions. In each decomposition step, the lowpass subband of the previous decomposition is further decomposed. The L5 subband represents a subsampled version of the image, while the other subbands contain the detail-information. Other frequency transforms such as e.g. the discrete cosine transform (DCT) are also suitable to decompose the image into subbands.

After the frequency transform, the coefficients of the subbands are entropy coded. In other words, $g>1$ coefficients of a subband ABm, with $A,B\in\{L,H\}$, $m\in N$, are arranged into a coefficient group. Then the most significant non-zero bit plane of the coefficient group is signaled, followed by the raw data bits. More details on the coding technique are explained in the following section.

If GCLI coding, as exemplarily shown in Figure 5, may be used, a number of coefficients (being larger than one), belonging to the same subband of a frequency transform, are combined into a group (from now, called *coefficient group*). These coefficients are represented in sign-magnitude representation. The largest coefficient in the group determines the number of active bit planes. A bit plane is called active, if at least one coefficient bit of the bit plane itself or any higher bit plane (bit plane representing a larger number) is unequal to zero. The number of active bit planes is given by the so-called GCLI value (Greatest Coded Line Index). A GCLI value of zero means that no bit planes are active, and hence the complete coefficient group is zero. This situation is known as *insignificant GCLI,* and *significant GCLI* vice versa (if the GCLI value is non-zero, i.e. there are active bit planes). In order to achieve compression, only the active bit planes are placed into the bit stream.

For lossy encoding, some of the bit planes need possibly to be truncated, such that the number of bit planes transmitted for a coefficient group is smaller than the GCLI value. This truncation is specified by the so-called GTLI (Greatest Trimmed Line Index). A GTLI of zero corresponds to no truncation. A GTLI value of one means that the number of transmitted bit planes for a coefficient group is one less than the GCLI value. In other words, the GTLI defines the smallest bit plane position that is included in the bit stream. In case of a simple deadzone quantization scheme, the transmitted bit planes equal the bit planes of the coefficient group without the truncated bit planes. In case of more advanced quantization schemes, some information of the truncated bit planes can be "pushed" into the transmitted bit planes by modifying the quantization bins. More details can be found in [6].

Since for each coefficient the number of remaining bit planes equals the difference between the GCLI and the GTLI values, it gets obvious that coefficient groups whose GCLI is smaller or equal to the GTLI value are not contained in the bit stream.

The active bit planes remaining after truncation and quantization are called *remaining bit planes* in the following (or also *truncated GCLI*). Moreover, the GTLI is also called *truncation point* in the following. When the number of remaining bit planes is zero, the GCLI is known as *Insignificant Truncated GCLI.*

These remaining bit planes are then transmitted as raw bits to the decoder. In order to enable correct decoding, the decoder needs to know the GCLI value of every coefficient group. Together with the GTLI value, which is also signaled to the decoder, the decoder can infer the number of raw data bit planes that are in the bit stream.

Today, massively parallel platforms like GPUs (Graphics Processing Units) allow to launch thousands of code instances (or threads) concurrently. These platforms dispose hardware enough to execute hundreds of threads simultaneously (from the thousands that were launched). The change of thread context is usually lightweight in these systems.

Hence, a parallel design of code should distribute independent items of data among all the threads. In order to achieve this, threads need to know where to access the items of data beforehand. This information should be available in some accessible form, or at least easily pre-computed in a pre-processing stage. Otherwise, threads cannot run in parallel. Using the current design of GCLI coding with GCLI skipping (escape coding), parallel coding is not efficiently possible.

Therefore, there is a need for an improved approach.

It is an object of the present disclosure to provide an improved concept for GCLI coding that is suitable for parallel processing.

A first aspect of the invention concerns a decoder for decoding image data from a data stream. The image data comprises data on coefficients which has been obtained from a frequency transform, for example a wavelet transform, of the image data. The image data further comprises Greatest Coded Line Index (GCLI) values, which will be explained in more detail below. Both the data on coefficients and the GCLI values are related to a coefficient group within a sequence of coefficient groups. That is, each coefficient comprises data, i.e. the data on the respective coefficient, and two or more coefficients are combined into a coefficient group. Each coefficient group comprises a GCLI value. Two or more of said coefficient groups are combined into a sequence of coefficient groups. The inventive decoder is configured to decode the GCLI values of the sequence of coefficient groups. Furthermore, the inventive decoder comprises an analyzer for analyzing the GCLI value of each $N^{th}$ coefficient group, wherein N is greater or equal than 2, for example for each second, third, fourth and so on coefficient group selected out of the sequence of coefficient groups. Said GCLI value of an $N^{th}$ coefficient group is analyzed as to a detection of a run of coefficient groups, wherein a run starts at any one of the $N^{th}$ coefficient groups. Such a run of coefficient groups describes an occurrence of consecutive coefficient groups each having a predetermined GCLI value, for example a GCLI value of zero. Runs will be explained in more detail below. According to the invention the decoding unit is further configured to decode the data on the coefficients being part of a run by using an escape decoding mechanism. That is, if the analyzer has detected a run, as described above, the decoding unit may decode the data on those coefficients that belong to said run by using a particular decoding mode, namely an escape decoding mechanism, in order to obtain the coded image data. For example, an escape decoding mechanism may provide for skipping decoding of those coefficient groups being part of a run. For those coefficients that are not part of a run, the decoding unit may decode the data on said coefficients by using the GCLI values in order to obtain the image data. In the latter case the decoding unit may, for example, use a predictive coding scheme wherein data on a current coefficient may be decoded by predicting the GCLI value (of the coefficient group to which said coefficient belongs) from the GCLI value of one of its preceding coefficient groups.

A second aspect of the invention concerns an encoder for encoding image data into a data stream. The image data is decomposed, for example by means of a frequency transform, into a plurality of different subbands, wherein each subband comprises a plurality of coefficients, and the plurality of coefficients are arranged in a sequence of coefficient groups. The inventive encoder comprises an analyzer configured to analyze the sequence of coefficient groups so as to determine a run of coefficient groups, wherein a run starts at any of an $N^{th}$ coefficient group, wherein N is greater or equal than 2. Accordingly, the analyzer may determine whether an $N^{th}$ (i.e. second, third, fourth, and so on) coefficient group may be a start of a run of coefficient groups. Such a run of coefficient groups describes an occurrence of consecutive coefficient groups each having a predetermined GCLI value, for example a GCLI value of zero. Therefore, the analyzer is configured to assign a Greatest Coded Line Index (GCLI) value for each coefficient group. The encoder further comprises an encoding unit for encoding these GCLI values. The GCLI values may, for example, be coded into the data stream as raw data or as prediction residuals if using a predictive coding scheme. According to the invention the encoding unit is further configured to encode data on those coefficients being part of a run by using an escape encoding mechanism in order to encode the image data. For example, an escape encoding mechanism may provide for skipping encoding of those coefficient groups being part of a run. The encoding unit is further configured to encode data on those coefficients not being part of a run by using the GCLI values in order to encode the image data. For example the GCLI value of a current coefficient group may be predictively coded by using the GCLI value of at least one of the preceding coefficient groups as a predictor.

A third aspect of the invention concerns a data stream for coded image data. The data stream comprises data on coefficients obtained from a frequency transform of the image data, for example from a wavelet transform. The data stream further comprises Greatest Coded Line Index (GCLI) values. Both the data on coefficients and the GCLI values are related to a coefficient group. Two or more of said coefficient groups are in turn arranged within a sequence of coefficient groups. An $N^{th}$ coefficient group, wherein N is greater or equal than 2, is to indicate a start of a run of coefficient groups. In the inventive data stream the GCLI value of an $N^{th}$ coefficient group is arranged before the GCLI values of other coefficient groups being part of said run. Furthermore, both the GCLI value of the $N^{th}$ coefficient group and the GCLI values of the other coefficient groups are arranged before the data on the coefficients belonging to the $N^{th}$ and the other coefficient groups.

A fourth aspect of the invention concerns a method for decoding image data from a data stream comprising data on coefficients obtained from a frequency transform of the image data and Greatest Coded Line Index (GCLI) values, each related to a coefficient group within a sequence of coefficient groups. The inventive method comprises a step of decoding the GCLI values of the sequence of coefficient groups. The inventive method further comprises a step of analyzing the GCLI value of each $N^{th}$ coefficient group so as to determine a run of coefficient groups, wherein a run starts at any one of the $N^{th}$ group of coefficients, wherein N is greater or equal to 2. The inventive method further comprises a step of decoding the data on the coefficients being part of a run by using an escape decoding mechanism and decoding the data on coefficients not being part of a run by using the GCLI values in order to obtain the image data.

A fifth aspect of the invention concerns a method for encoding image data into a data stream, the image data being decomposed into a plurality of different subbands, each subband comprising a plurality of coefficients, wherein the plurality of coefficients are arranged in a sequence of coefficient groups. The inventive method comprises a step of analyzing the sequence of coefficient groups so as to determine a run of coefficient groups, wherein a run starts at any of an $N^{th}$ coefficient group, wherein N is greater or equal than 2, and assigning a Greatest Coded Line Index (GCLI) value for each coefficient group. The inventive method further comprises a step of encoding the GCLI values and encoding data on those coefficients being part of a run by using an escape encoding mechanism and encoding data on those coefficients not being part of a run by using the GCLI values in order to encode the image data.

The above mentioned aspects of the invention allow for a massive parallel computation of data, in particular image data of either static images or moving image sequences. The $N^{th}$ coefficient groups may in the following also be referred to as run heads. Said run heads indicate a start of a run of two or more consecutive coefficient groups each comprising a predetermined GCLI value. As will be explained below in more detail, such a predetermined GCLI value may also be referred to as an escape GCLI code. For example, an escape GCLI code may be signaled by the value '-1'. According to the invention, the number of consecutive coefficient groups determines the run-length of a run. Run heads may, for example, be positioned within the sequence of coefficient groups at positions multiple of said run-length. This is, however, not mandatory and according to alternatives, run heads may be spread at a pitch of a length of N GCLI groups with N and the run length differing, and/or even with N and/or the run length varying across the picture such as par subband. Furthermore, starting from such a run head, escape encoding and/or escape decoding may be used. Escape coding (i.e. encoding and/or decoding) may be defined by skipping coding (i.e. encoding and/or decoding) of those coefficient groups contained within a run.

Furthermore, predictive coding may be used according to the invention for coding the GCLI values. Thus, only prediction residuals may be transmitted in the data stream. According to the invention, horizontal and vertical prediction may be used.

The combination of the so-called run heads with the predictive coding of the GCLI values may allow for enabling the above mentioned massive parallel computing which was not possible before.

Embodiments of the present invention will be discussed subsequently referring to the enclosed drawings, wherein:

Fig. 1 shows a schematic structure diagram of wavelet transform of an image examplary assuming two vertical and 4 horizontal decompositions (4:2 decomposition);

Fig. 2 shows a schematic block diagram of a decoder for decoding image data from a data stream;

Fig. 3 shows a schematic block diagram of an encoder for encoding image data into a data stream;

Fig. 4 shows a schematic block diagram of a data stream;

Fig. 5 shows a schematic diagram illustrating the principle of GCLI coding;

Fig. 6 shows an schematic diagram of an exemplary organization of the coefficient groups in precincts;

Fig. 7 shows a schematic sequence of coefficient blocks revealing runs at arbitrary positions;

Fig. 8 shows a schematic sequence of coefficient blocks revealing runs only at fixed positions;

Fig. 9 shows a schematic representation of two precincts;

Fig. 10 shows an exemplary table revealing, for a sequence of 15 consecutive coefficient groups, using fixed zero run coding, the number of (transmitted) truncated GCLIs in the first row, the number of prediction residuals in the second row, the signaling of the residual to indicate an escape value for the group of coefficients without escape GCLI prediction in row 3 and with escape GCLI prediction in row 4;

Fig. 11 shows a schematic block diagram of a decoder according to embodiments showing fixed run coding;

Fig. 12 depicts a simplified block diagram of the encoder according to embodiments showing fixed run coding;

Fig. 13 shows a schematic block diagram of the decoder according to an embodiment using prediction from escape GCLI values without fixed run coding;

Fig. 14 shows an exemplary simplified block diagram of the encoder according to embodiments;

Fig. 15 shows a schematic structure of a data stream suitable for vertical prediction;

Fig. 16 shows a schematic structure of a data stream suitable for horizontal prediction (top) and vertical prediction (bottom);

Fig. 17 shows a schematic structure of data streams used in an exemplary slice;

Fig. 18 shows a prediction chain in horizontal;

Fig. 19 shows a structure of a data stream with a set of headers;

Fig. 20 shows an excerpt of a data stream;

Fig.21A shows a prediction chain in horizontal; and

Fig. 21 B shows a further prediction chain in horizontal.

In the following, embodiments of the invention will be described in further detail. It is to be pointed out that the same or functionally equal elements are given the same reference numbers in the figures and that a repeated description for elements provided with the same reference numbers is omitted. Hence, descriptions provided for elements having the same reference numbers are mutually exchangeable. Furthermore, when referring to both, encoding and decoding, the abbreviation coding is used. Thus, coding refers to both encoding and decoding.

Fig. 2 shows a schematic block diagram of a decoder 2 for decoding image data 4 from a data stream 6. The data stream 6 comprises data 8 on coefficients obtained from a frequency transform of the image data 4 and data on so-called Greatest Coded Line Index (GCLI) values 10, which will be described in more detail below. Said data on Greatest Coded Line Index (GCLI) values 10 will in the following be briefly referred to as GCLI values 10. Both the data 8 on coefficients and the GCLI values 10 are related to a group of coefficients of a sequence of groups of coefficients. More precisely, the data 8 itself is related to single coefficients, i.e. each coefficient may have its own data 8. Two or more coefficients, and in particular two or more consecutive coefficients, may be grouped together into a group of coefficients, which will in the following also be referred to as a coefficient group. Two or more coefficient groups, and in particular two or more consecutive coefficient groups, may form a sequence of coefficient groups.

As it is exemplarily depicted in Figure 5, a first coefficient 50 of a coefficient group 54 may have a first data structure 24a containing data 8. The data 8 may be represented by magnitude bits 55, in this example eight bits. The same holds true for the second coefficient 51, the third coefficient 52 and the fourth coefficient 53 of the coefficient group 54. Thus, the data structure 24a may also be referred to as a bit plane. Accordingly, the first coefficient 50 may comprise a first bit plane 24a, the second coefficient 51 may comprise a second bit plane 24b, the third coefficient 52 may comprise a third bit plane 24c, and the fourth coefficient 53 may comprise a fourth bit plane 24d.

Figure 5 illustrates the general principle of the so-called GCLI coding. A number of coefficients 50 to 53 (being larger than one), each belonging to the same subband of a frequency transform, may be combined into a group 54 (from now, called coefficient group 54). These coefficients 50 to 53 may be represented in sign-magnitude representation. The largest coefficient 50 to 53 in the group 54 may determine the number of active bit planes 26.

A bit plane 24a to 24d is called an active bit plane 26, if at least one coefficient bit 55 of the bit plane itself or any higher bit plane (bit plane representing a larger number) is unequal to zero. The number of active bit planes 26 is given by the GCLI value 10. A GCLI value of zero means that no bit planes are active, and hence the complete coefficient group 54 is zero. This situation is known as insignificant GCLI, and significant GCLI vice versa. In order to achieve compression, only the active bit planes 26 are placed into the bit stream.

For lossy encoding, some of the bit planes 24a to 24d need possibly to be truncated, such that the number of bit planes transmitted for a coefficient group 54 is smaller than the GCLI value 10. This truncation is specified by the so-called GTLI (Greatest Trimmed Line Index) 56. A GTLI of zero corresponds to no truncation. A GTLI value 56 of one means that the number of transmitted bit planes for a coefficient group 54 is one less than the GCLI value 10. In other words, the GTLI 56 may define the smallest bit plane position that is included in the bit stream. In case of a simple deadzone quantization scheme, the transmitted bit planes equal the bit planes of the coefficient group without the truncated bit planes. In case of more advanced quantization schemes, some information of the truncated bit planes can be "pushed" into the transmitted bit planes by modifying the quantization bins.

Since for each coefficient 50 to 53 the number of remaining bit planes 30 equals the difference between the GCLI value 10 and the GTLI value 56, it may become understandable that coefficient groups 54 whose GCLI value 10 is smaller or equal to the GTLI value 56 may not be contained in the bit stream.

The active bit planes remaining after truncation and quantization are called remaining bit planes 30 in the following (or also truncated GCLI). Moreover, the GTLI 56 is also called truncation point in the following. When the number of remaining bit planes is zero, the GCLI value 56 is known as Insignificant Truncated GCLI.

These remaining bit planes 30 may then be transmitted as raw bits to the decoder 2. In order to enable correct decoding, the decoder 2 may know the GCLI value 10 of every coefficient group 50 to 53. Together with the GTLI value 56, which may also be signaled to the decoder 2, the decoder 2 can infer the number of raw data bit planes that are contained in the bit stream.

The GCLI values 10 themselves may, for instance, be signaled by a variable length code that represents the difference to the GCLI value 10 of a previous coefficient group. This previous coefficient group may in principle be any coefficient group that the encoder has already encoded before. Hence, it may for instance be a horizontal or a vertical neighbor coefficient group, as will be explained in more detail afterwards.

The output from such a prediction may be the difference in the number of remaining bit planes 30 between two coefficient groups 54, 58 leading to a delta remaining bit planes 57. More details on this aspect can be found in the sections below. It shall be noted that GCLI values 10 being below the GTLI value 56 may be of less interest, since the coefficients may not be contained in the bit stream in any case. Consequently, the prediction may be performed in such a way that the decoder 2 may infer whether the GCLI value 10 is greater than the GTLI value 56, and if so, what is the value of the GCLI 10.

The method described herein may be agnostic to the transmission order of the different bit stream parts. For instance, it may be possible to first place the GCLI coefficients of all subbands into the bit stream, followed by the data bits of all subbands. Alternatively, GCLI and data bits might be interleaved.

As mentioned above, the GCLI values 10 may be values identifying a number of remaining bit planes 30 of a coefficient group 54. Remaining bit planes 30 may also be referred to those non-zero bit planes of a coefficient group 54 above a threshold value.

The GCLI values 10 may refer to a prediction value of the GCLI, e.g. a difference between two consecutive (or subsequent) remaining bit planes 30 of coded coefficient groups 54, or to the GCLI value itself, i.e. a number of active bit planes 26 or a number of remaining bit planes 30 which is described with respect to Fig. 5.

The data 8 on the coefficients 50 to 53 may refer to raw bits 55 representing the coefficient values. The coefficient values may be represented by a length of the respective raw bit representation equal to the total bit depth (i.e. a maximum number of magnitude bits 55) used to represent the coefficients 50 to 53, which may be a result of the chosen quantization levels.

However, the coefficient values may also be represented by a number of bits equal to a number of non-zero bit planes 26 of a coefficient group 54 to which a current coefficient 50 to 53 may be assigned to (i.e. a number of active bit planes 26) or by a number of bits further taking a number of bit planes below a threshold value into consideration, i.e. a number of remaining bit planes 30.

Referring back to Figure 2, the inventive decoder 2 may comprise a decoding unit 12 and an analyzer 14. The decoding unit 12 may be configured for decoding the GCLI values 10 with decoding the GCLI values 10 for each $N^{th}$ coefficient group of the sequence of coefficient groups prior to remaining coefficient groups of the sequence of coefficient groups, wherein N is greater or equal than 2.An $N^{th}$ coefficient group may also be referred to as a run head at which a run starts. Thus, the decoding unit 12 may determine the GCLIs for the potential run heads prior to the GCLIs for the remaining coefficient groups.

The analyzer 14 may be configured for analyzing the GCLI values 10 for each $N^{th}$ coefficient group so as to determine runs of coefficient groups starting with any of the $N^{th}$ coefficient group (i.e. run head). Based on this information on the run heads, any coefficient group may be decoded independently from other coefficient groups, which efficiently enables to apply a parallel processing system to determine the remaining coefficient groups.

Therefore, the decoding unit 12 may be configured to decode the data 8 on those coefficients 50 to 53 being part of a run by using an escape decoding mechanism and to decode the data 8 on the remaining coefficients not being part of a run from the data stream to obtain the image data 4. In other words, the data 8 on the coefficients 50 to 53 and the data on the GCLIs 10 of the coefficient groups 54 being part of a run may not be encoded in raw in the data stream. The decoding unit 12 may apply the decoding mechanism to decode these coefficient groups 54. According to some embodiments, this decoding mechanism may comprise the allocation of zero values to the respective coefficient groups 54 of a run of coefficient groups. Thus, a run of coefficient groups may also be referred to as zero-run.

Stated in yet other words, the inventive decoder 2 as shown in Figure 2 may be configured for decoding image data 4 from a data stream 6 comprising data 8 on coefficients obtained from a frequency transform of the image data 4 and comprising Greatest Coded Line Index (GCLI) values 10, each related to a coefficient group within a sequence of coefficient groups.

According to the invention, the decoder 2 may comprise a decoding unit 12 for decoding the GCLI values 10 of the sequence of coefficient groups. The decoder 2 may further comprise an analyzer 14 for analyzing the GCLI value 10 of each $N^{th}$ coefficient group (i.e. run head) so as to determine a run of coefficient groups. Such a run may start at any one of the $N^{th}$ coefficient groups (i.e. run heads), wherein N is greater or equal than 2.

According to the invention, the decoding unit 12 may further be configured to decode the data 8 on those coefficients being part of a run by using an escape decoding mechanism and to decode the data 8 on those coefficients not being part of a run by using the GCLI values 10 in order to obtain the image data 4.

The principles of escape coding (i.e. encoding and/or decoding) will be explained in more detail below.

Fig. 3 shows a schematic block diagram of an inventive encoder 20. The encoder 20 may be configured for encoding image data 4 into a data stream 6, the image data 4 being decomposed into a plurality of different subbands (c.f. Fig. 1), each subband comprising a plurality of coefficients 50 to 53 (c.f. Fig. 5), wherein the plurality of coefficients 50 to 53 are arranged in a sequence of coefficient groups 54, 58.

The inventive encoder 20 may comprise an analyzer 14' configured to analyze the sequence of coefficient groups 54, 58 so as to determine a run of coefficient groups, wherein a run may start at any of an $N^{th}$ coefficient group (i.e. run head), wherein N is greater or equal than 2. The analyzer 14' may further be configured to assign a Greatest Coded Line Index (GCLI) value 10 to each coefficient group 54, 58.

The inventive encoder 20 may also comprise an encoding unit 12 for encoding the GCLI values 10, wherein the encoding unit 12 may further be configured to encode data 8 on those coefficients being part of a run by using an escape encoding mechanism and to encode data 8 on those coefficients not being part of a run by using the GCLI values 10 in order to encode the image data 4.

The principles of escape coding (i.e. encoding and/or decoding) will be explained in more detail below.

In other words, the encoder 20 may be configured for encoding image data 4 into a data stream 6. The image data 4 may be decomposed into a plurality of different subbands, each subband comprising a plurality of coefficients, wherein the plurality of coefficients are arranged into a sequence of groups of coefficients. The encoder 20 may comprise an analyzer 14' and an encoding unit 18.

The analyzer 14' may be configured to analyze the sequence of groups of coefficients so as to determine runs of coefficient groups starting from any of an $N^{th}$ coefficient group, wherein N is greater or equal than 2. Said $N^{th}$ coefficient group may be referred to as a run head. The analyzer 14' may be configured to determine, for the sequence of coefficient groups, Greatest Coded Line Index (GCLI) values 10 based on the determined runs. In other words, the analyzer 14' may perform the analysis of the image data 4, which may optionally include the image data decomposition into the plurality of different subbands. However, input to the analyzer 14' may also be the already decomposed data, where the analyzer 14' may not perform a decomposition thereon.

The analysis of the sequence of coefficient groups may determine, for example, whether the data on subsequent coefficient groups may be zero or empty, wherein a number of the subsequent coefficient groups may be equal to a predetermined run-length so as to determine a run of coefficient groups. In other words, the analyzer 14' may count, starting from any of the $N^{th}$ coefficient groups (i.e. run heads), a number of subsequent coefficient groups having no remaining bit planes. If the count is equal to the run-length, the analyzer 14' may determine a run which may be encoded using an escape encoding mechanism. A run may start from any run head but it may, in turn, not start from any of the other coefficient groups, for example.

As will be explained in further detail below, the inventive principle may use a so-called escape value (also referred to as an escape GCLI code in the following) to signal a run and to perform escape encoding or escape decoding, respectively. The escape value may be a (mathematically/computationally) invalid number of transmitted bit planes assigned to those coefficient groups being the start of a run if the coefficient groups are encoded in raw mode. In this case, the number of transmitted bit planes may be minus one (-1) active/remaining bit planes or a number of active/remaining bit planes exceeding a maximum bit depth of the coefficients, i.e. a maximum possible number of bits representing the coefficients (magnitude value), which is computationally not possible to transmit. If predictive coding is used, the escape value may be chosen such that, if the escape value is added to the previously coded coefficient group, an invalid number of transmitted bit planes (number of active/remaining bit planes) of the coefficient group where the run starts, is the result. The resulting invalid number of transmitted bit planes indicates, for example to the decoder 2, the application of the escape decoding mechanism, e.g. a stop of decoding of coefficient groups having only zero active/remaining bit planes, and thus to apply its reverse escape decoding mechanism. As mentioned above, the inventive encoder 20 may be configured to encode the data 8 on the coefficients 50 to 53 and the GCLI values 10 of coefficient groups 54 into the data stream, while the inventive decoder 2 may be configured to decode said data stream.

Fig. 4 shows a schematic block diagram of such a data stream 22 comprising data 8 on coefficients obtained from a frequency transform of the image data 4 and comprising Greatest Coded Line Index (GCLI) values 10, each related to a coefficient group within a sequence of coefficient groups, wherein the GCLI value 10 of an $N^{th}$ coefficient group 10a (i.e. run head) is arranged before the GCLI values 10b of other coefficient groups being part of the run. Furthermore, both the GCLI value 10a of the $N^{th}$ coefficient group (i.e. run head) and the GCLI values 10b of the other coefficient groups may be arranged before the data 8 on the coefficients.

The data stream 22 may further comprise any features introduced by the encoder 20 during encoding or used by the decoder 2 during decoding and may therefore be not explicitly described with respect to the data stream 22. The transmission order of the remaining GCLI values 10b and the data 8 on the coefficients may be of less importance. Thus, the remaining GCLI values 10b may be arranged in the data stream 22 before the data 8 on the coefficients, or both may be interleaved.

## Coefficient Organization

Fig. 6 shows a schematic diagram of an exemplary organization of the above described coefficients 50 to 53 and coefficient groups 54, 58 in so-called precincts. The coefficients of the frequency transform as depicted in Fig. 1 may be organized in so-called precincts as depicted in Fig. 6. Precincts group coefficients of different subbands contributing to a given spatial region in the input image.

Fig. 6 shows the image data 4 being decomposed into subbands (bold printed boxes in Fig. 6). Each subband may comprise multiple precincts 8'a, 8'b. Coefficients 50 to 53 (as explained above with reference to Figure 5) may be arranged in each precinct 8'a, 8'b of each subband. These coefficients 50 to 53 may be grouped into coefficient groups 54, 58. One exemplary coefficient group organization within a precinct is shown at the bottom of Fig. 6.

## Prediction Schemes

In order to enable the decoder 2 to recover the signal, it may have to know the GCLI value 10 for every coefficient group 54, 58. Different methods may be available, some of them are described in [1] to signal them efficiently. Different possibilities exist to implement differential coding/decoding.

## RAW Mode

In the RAW mode, the GCLI value may be transmitted without any prediction. Hence, let $F_1$ be the coefficient group to be encoded next. Then the GCLI value can be encoded by a fixed length codeword representing the value:

$$\max(GCLI(F_1) - GTLI(F_1), 0)$$

## Horizontal Prediction

In a horizontal prediction, the symbol coded is the difference between the GCLI value and the value of the GCLI previously coded belonging to the same line and the same wavelet subband, and considering the GTLI. This difference value is called *residual or $\delta$ value* in the following.

Let $F_1$ and $F_2$ be two horizontally neighbored coefficient groups, consisting of $g > 1$ coefficients. Let $F_2$ be the coefficient group to be currently coded. Then $GCLI(F_2)$ can be signaled to the decoder by transmitting a residual calculated as follows:

$$\delta = \begin{cases} \max(GCLI(F_2), GTLI(F_2)) - \max(GCLI(F_1), GTLI(F_2)) & if\ GCLI(F_1) > GTLI(F_1) \\ \max(GCLI(F_2), GTLI(F_2)) - GTLI(F_2) & otherwise \end{cases}$$

The decoder recovers $GCLI(F_2)$ by computing

$$GCLI'(F_2) = \delta + \begin{cases} \max(GCLI(F_1), GTLI(F_2)) & if\ GCLI(F_1) > GTLI(F_1) \\ GTLI(F_2) & otherwise \end{cases}$$

$$GCLI(F_2) = \begin{cases} GCLI'(F_2) & if\ GCLI'(F_2) > GTLI(F_2) \\ 0 & otherwise \end{cases}$$

It shall be noted that in horizontal prediction, typically $GTLI(F_1) = GTLI(F_2)$. Furthermore, $\delta$ may be transmitted as a variable length code, e.g. as described in [2].

## Vertical Prediction

In a vertical prediction between two subband lines, the result is the difference between the GCLI value and the GCLI of the same subset of coefficients in the previously coded line.

Let $F_1$ and $F_2$ be two vertically neighbored coefficient groups, consisting of $g > 1$ coefficients. Let $F_2$ be the coefficient group to be currently coded. Then $GCLI(F_2)$ can be encoded in the same way as described for the horizontal prediction above.

Vertical prediction may be restricted within a *slice,* which is a predefined set of contiguous lines (e.g. 64 lines). In this way, the first precinct of a slice cannot be vertically predicted.

## Coding Mode with Significance Flags

In addition to the prediction modes, different coding modes (such as a coding mode with significance flags) can be used. In the following, coding modes are simply considered as additional prediction modes for reasons of simplicity.

Reference [6] proposes a method to compress zero GCLIs more efficiently. To this end, consecutive coefficient groups are arranged into *GCLI groups.* All GCLI groups are of the same size (e.g. eight). Then, a single bit flag indicates if the corresponding delta remaining bit planes of the complete GCLI group are all zero. Zero GCLI groups are not further encoded, while non-zero GCLI groups are encoded as described above according to any of the prediction schemes.

However, one goal of presently described embodiments is to further enhance the above mentioned coding modes so as enhance the parallelism in decoding, while preserving massive parallel computation as described so far. Therefore, a novel type of GCLI zero-run coding is described hereinafter aiming to reduce the bits required for GCLI coding. To this end, one goal is to skip GCLI coding for GCLI coefficient groups where all coefficients are zero, which may also be referred to as escape coding.

## Principle of zero-run coding

In order to allow proper image decoding, the decoder 2 may have to be informed which GCLI values 10 are not contained in the bit stream 22. This can be achieved by signaling a GCLI value 10 that is not used for ordinary coding, i.e. an invalid value. For instance, a GCLI that exceeds the bit depth of a coefficient 50 to 53 may usually not be used for regular coding. Thus, it can be used to inform the decoder about skipped GCLI values.

Similarly, GCLI values 10 below the GTLI value 56 may not be used for normal coding, since setting *GCLI* = *GTLI* already defines a zero coefficient. Hence, signaling a GCLI value equaling *GTLI* - 1 can also be used to inform the decoder 2 about skipped GCLI coefficients. In the remainder of this document, only this option will be exemplarily described in more detail. However, the method may be equally applied to other negative values smaller than minus one ('-1'). The GCLI values 10 used to signal GCLI skipping (i.e. escape coding) are also referred to as *escape GCLI codes* in the following.

GCLI zero-run coding uses this concept to skip *runs* of consecutive insignificant truncated GCLI values within a subband line [7]. A run happens when (see Fig. 7 for an example):

- The amount of consecutive insignificant truncated GCLI values 8'$a_8$-8'$a_{15}$ equals a pre-defined, fixed number 32, also known as *run length.*
- Or the number of GCLI values 8'$a_{19}$-8'$a_{24}$ in the run 32' is less than the run length 32, and the last coefficient is the last one in the subband. This type of runs 32' may only be considered when there is a saving of bits.

In Fig. 7, Box 8'$a_1$ indicates an exemplary significant (truncated) GCLI value wherein Box 8'$a_2$ indicates an exemplary insignificant (truncated) GCLI value. The run length in this example is set to eight (consecutive/subsequent insignificant truncated GCLI values 8'$a_2$ following a significant GCLI value 8'$a_1$).

Assuming that the encoding of the GCLI coefficients is done sequentially (in Fig. 7, from left to right), when a run is encountered, only the first zero-valued GCLI of the run may be signaled using an escape GCLI code. This may be done by adjusting the prediction residual in such a way that the value for the GCLI gets smaller than the GTLI value to apply (i.e., the resulting GCLI value after the inverse prediction would have a negative number of bit planes). The rest of GCLIs within the run may then be skipped, which may also be referred to as escape coding within this document.

If the GCLIs may be encoded without prediction, the same principle applies. By saving a value smaller than the GTLI value 56 into the data stream 22, the decoder 2 may infer a run of zeros, or simply referred to as a run. This method may not be possible without overhead when the GTLI value 56 is zero. In this case, a negative GCLI value may be signaled. However, by default the GCLI values may always be positive (or zero) if they are coded in raw. Signaling a negative value instead may lead to the above mentioned overhead since a suitable format needs to be chosen, since sign bits may not be available. This, however, is typically not a concern, since GTLI = 0 means lossless coding, which occurs not very often. And if it occurs, the probability of consecutive zeros is reduced in any case, or there is enough rate available to encode them in the traditional way.

The present invention instead describes an improvement of the spatial zero-runs method using fixed runs and a prediction from escape GCLI. These variants, as part of the invention, will be explained in more detail in the following.

## Variant with fixed runs

Fig. 8 shows a schematic diagram according to an example of fixed runs. The same coding of the boxes as in Fig. 7 may be used to signal whether a box refers to a significant truncated GCLI value or an insignificant truncated GCLI value. Additionally, the first boxes 8'$a_1$, 8'$a_9$, 8'$a_{17}$ may indicate an $N^{th}$ coefficient group (more precisely the GCLI value of an $N^{th}$ coefficient group), i.e. a run head. There may be different alternatives for the definition of a run. In this concern, *Fixed Zero Runs* may, for instance, be runs as above, but forcing to start always in a position multiple of "run length". That is, runs can be seen as groups of (GCLI) coefficient groups of size "run-length", being a little bit more precise. Hence, a run may happen in this variant when:

- Same conditions for a run hold, as explained above (Fig. 7), i.e. the amount of consecutive insignificant GCLI values equals the run-length 32, or the last coefficient of a run 32' ends at the subband boundary, even though the actual run length may not have been reached yet;
- And the first GCLI coefficient of the run is in a position multiple of run-length; this first GCLI coefficient is referred to as a *run head.*

In this way, only some predefined GCLI coefficient groups are candidates to start a run (called *run heads*), having a separation of "run length" one from another within a subband. Thus, N may be equal to the run length, i.e. eight in Figures 7 and 8. In particular, Figure 8 shows, in addition to the above described run heads 8'$a_1$, 8'$a_9$ and 8'$a_{17}$, also significant GCLI coefficients 8'$a_4$ to 8'$a_7$ and insignificant GCLI coefficients 8'$a_2$, 8'$a_3$, 8'$a_{10}$ to 8'$a_{16}$ and 8'$a_{18}$ to 8'$a_{21}$. The run-length in this example is set to eight. The GCLI coefficients 8'$a_1$, 8'$a_9$ and 8'$a_{17}$ are the candidates for run heads, i.e. the possible starting points of runs.

Fig. 9 shows the distribution of the run heads (small boxes 8'$a_1$, 8'$a_9$ etc) in a precinct for the fixed zero run method. A run head refers to those positions where a run is allowed to start. Fig. 9 shows on top a precinct having two vertical decompositions and at the bottom a precinct having one vertical decomposition. Both show five horizontal decompositions.

## Variant with prediction from escape GCLI

As mentioned, the residual to get an escape GCLI may be written in the code stream whenever a run is fulfilled, or the escape GCLI itself may be transmitted if not a predictive coding but the raw coding mode is used. For the sake of simplicity, only the predictive coding will be described in the following as an example. However, the principle is also applicable to the raw encoding mode.

Figure 10 shows a table of an example of predictive escape coding, i.e. a variant with prediction from escape GCLI codes. In the first (from top to bottom) line of the table, the position of the coefficient groups, also referred to as GCLI groups, is shown. As mentioned above, each coefficient group may comprise two or more coefficients. In this example, there are sixteen coefficient groups labeled from coefficient group '0' to coefficient group '15'. Accordingly, the table in Figure 10 shows a sequence of coefficient groups.

In the second line of the table in Figure 10, the truncated GCLIs of the respective coefficient groups are shown. As can be seen, the first thirteen groups from '0' to '12' comprise zero values for their respective GCLIs. Accordingly, they may be part of a run.

In the example shown in Figure 10, a run-length of four may be chosen for a run. Accordingly, a run may start if four consecutive zero-valued coefficient groups consecutively follow one another. This may, for instance, be the case for the coefficient groups '0' to '3' which may represent a first run 101, as well as for the coefficient groups '4' to '7' representing a second run 102 and the coefficient groups '8' to '11' representing a third run 103.

These consecutive zero values may have already been assigned to the respective groups upon encoding by the encoder, wherein the encoder may have used an escape encoding mechanism for encoding the zero valued GCLIs.

Therefore, according to some embodiments the inventive encoder 20 may be configured to allocate zero values to coefficients of those coefficient groups being part of a run 101, 102, 103 so as to perform the escape encoding mechanism.

Also the decoder 2 may perform an escape decoding mechanism, as will be described in more detail below. Therefore, according to some embodiments the inventive decoder 2 may be configured to allocate zero values to coefficients of those coefficient groups being part of a run 101, 102, 103 so as to perform the escape decoding mechanism

So as mentioned above, coefficient groups with consecutive zero valued GCLIs may form a run of a predetermined run-length (e.g. four in the example discussed above). A run may start from a run head, which may be an $N^{th}$ coefficient group on a certain position within the sequence of coefficient groups. Furthermore, a run may have a predetermined length which is referred to as the run-length. Accordingly, a run is a sequence of coefficient groups of a predetermined run-length size.

According to the invention, coefficient groups on certain positions may be selected as run heads. As explained with reference to Figure 9 those coefficient groups being in a position multiple of the predetermined run-length size may be selected as run heads.

According to embodiments, the inventive encoder 20 may be configured to appoint an $N^{th}$ coefficient group the start of a run if said $N^{th}$ coefficient group is in a position multiple of said predetermined run-length size. Thus, the inventive encoder 20 may perform escape encoding afterwards.

The same holds true for the decoder. According to embodiments, the inventive decoder 2 may be configured to appoint an $N^{th}$ coefficient group the start of a run if said $N^{th}$ coefficient group is in a position multiple of said predetermined run-length size. Thus, the inventive decoder 2 may perform escape decoding afterwards.

Referring back to Figure 10, whenever a run is fulfilled, the remaining GCLIs after the run head, i.e. the remaining run-length - 1 GCLIs may be skipped, which is also referred to as escape coding (i.e. escape decoding mechanism and/or escape encoding mechanism).

A run may be signaled in different ways. According to this invention, the start of a run, i.e. a run head, may be signaled by means of an escape GCLI code. As can be seen in the third line of the table in Figure 10, such an escape GCLI code may be signaled by a GCLI value outside a predetermined GCLI value range. In this example, the escape GCLI code is signaled by a negative GCLI value, namely by '-1'. Each run head will be signaled by this escape GCLI code having the value '-1'. As already explained with reference to Figure 5 above, a coefficient group may have a certain number of active bit planes ranging from zero to the number of magnitude bits contained in the bit plane. The active bit planes may be signaled with GCLI values. Thus, the GCLI values may accordingly also range from zero to the number of magnitude bits contained in the bit plane. This is the predetermined GCLI value range. Since a negative number of active bit planes does not exist, said negative value is outside this predetermined GCLI value range and may thus be used as an escape GCLI code.

Referring back to Figure 10, the escape GCLI code (here '-1') may be signaled for each $N^{th}$ coefficient group, i.e. for each run head (e.g. group '0'). Coding of consecutive coefficient groups (e.g. groups '1', '2' and '3') may be skipped. That is, an escape coding mechanism may be used.

Thus, according to embodiments, the inventive encoder 20 may be configured to use an escape GCLI code of an $N^{th}$ coefficient group as an indication for performing the escape encoding mechanism and to determine the start of a run, wherein said escape GCLI code is represented by a GCLI value (e.g. '-1') outside a predetermined GCLI value range. Furthermore, the inventive encoder 20 may be configured to perform the escape encoding mechanism by skipping the encoding of the GCLI values of those coefficient groups which are part of the run.

The same holds true for the decoder 2. Thus, according to embodiments, also the inventive decoder 2 may be configured to use an escape GCLI code of an $N^{th}$ coefficient group as an indication for performing the escape decoding mechanism and to determine the start of a run, wherein said escape GCLI code is represented by a GCLI value (e.g. '-1') outside a predetermined GCLI value range. Furthermore, the inventive decoder 2 may be configured to perform the escape decoding mechanism by skipping the decoding of the GCLI values of those coefficient groups which are part of the run.

According to the invention, each of the GCLI values may be coded predictively. That is, from a sequence of truncated GCLIs (remaining bit planes after selecting a GTLI value), a prediction can be performed (as described above where prediction schemes are introduced). This prediction may give a sequence of residuals that are finally transmitted in the code stream.

These residuals may represent the differences between predicted coefficients. In the example shown in Figure 10, horizontal prediction is made, so the coefficients are predicted from the one before in the sequence; e.g. coefficient 14 can be calculated from 13 by just subtracting 1 (see second line in Fig. 10 "Prediction residuals"). If zero runs method is employed, it is executed after the prediction. Said predictive coding may also be referred to as differential coding.

When using a run length of four, for example, a run is fulfilled whenever four consecutive truncated GCLIs are zero (this may be independent of the residual values). In the example of Figure 10, runs start at positions 0, 4 and 8, which are called run heads.

For instance, when the variant with fixed runs is used, the only positions where a run is allowed to start are 0, 4, 8 and 12. After applying the runs, the run heads encoding a run may be replaced by a value used to get the escape GCLI code value (in the example, "-1 ").

According to embodiments, the inventive decoder 2 may be configured to decode for each of the coefficient groups (e.g. group '2') its GCLI value differentially to a GCLI value of a preceding coefficient group (e.g. group '1') and to appoint an $N^{th}$ coefficient group (e.g. group '0') the start of a run if the GCLI value of the $N^{th}$ coefficient group represents an escape GCLI code (e.g. '-1') and to use the GCLI value of the $N^{th}$ coefficient group for differentially decoding the GCLI values of any subsequent coefficient group (e.g. groups '1', '2' and '3'). In this case, the inventive decoder 2 may perform an escape coding mechanism.

Also the encoder may make use of predictive coding. According to embodiments, the inventive encoder 20 may be configured to encode for each of the coefficient groups (e.g. group '2') its GCLI value differentially to a GCLI value of a preceding coefficient group (e.g. group '1') and to appoint an $N^{th}$ coefficient group (e.g. group '0') the start of a run if the GCLI values of consecutive coefficient groups (e.g. groups '1', '2' and '3') of a predetermined run-length (e.g. run-length four) directly following the $N^{th}$ coefficient group are equal to or less than zero.

Furthermore, if the inventive encoder 20 may have determined a run in the above mentioned way, the encoder 20 is configured to replace the GCLI value of the $N^{th}$ coefficient group being the start of said run (i.e. the run head) by an escape GCLI code (e.g. '-1') and to use said escape GCLI code for differentially encoding the GCLI values of any subsequent coefficient group. In other words, the encoder may detect a run head, sets its GCLI value to an escape GCLI code (e.g. '-1') and performs the escape coding mechanism by skipping encoding of the consecutive coefficient groups being part of the run.

According to this invention, also the GCLIs of the run heads may be coded predictively. In particular the GCLIs of consecutive run heads may be predictively coded, i.e. differentially to its respective preceding run head.

According to this embodiment, the inventive encoder 20 may be configured to appoint a second $N^{th}$ coefficient group (e.g. group '4') a start of a consecutive second run if the GCLI values of consecutive coefficient groups (e.g. groups '5', '6' and '7') of a predetermined run-length directly following the second $N^{th}$ coefficient group are equal to or less than zero, and to encode for the second $N^{th}$ coefficient group its GCLI value differentially to the GCLI value of a preceding first $N^{th}$ coefficient group (e.g. group '0').

The decoder 2 may decode this encoded representation by using predictive decoding of the GCLIs of consecutive run heads in the following way.

According to such an embodiment, the inventive decoder 2 may be configured to decode for each of the $N^{th}$ coefficient groups its GCLI value differentially to a GCLI value of a preceding $N^{th}$ coefficient group (e.g. run head group '0') and to appoint the $N^{th}$ coefficient group (e.g. group '4') a consecutive start of a run if the GCLI value of the $N^{th}$ coefficient group (e.g. group '4') represents an escape GCLI code and to use zero instead of the escape GCLI code for differentially decoding the GCLI values of any subsequent coefficient group.

In other words, the escape GCLI code minus one ('-1') of group '0' may be reset to the value zero. Accordingly, zero is the predictor for predicting the GCLI of a subsequent coefficient group. Thus, for group '4' which is the consecutive run head a minus one ('-1') would have to be again signaled as escape GCLI code from the predictor zero. This is shown in the third line of Figure 10.

So as can be seen in this third line of Figure 10, each of the run heads may be signaled by a negative escape GCLI code, in this example a '-1'.

However, signaling a zero may be more efficient than signaling the escape $GCLI_S$, in particular negative escape GCLIs. For example, using the alphabet defined in [1], three bits are required for a '-1', and for signaling a zero, only 1 bit is required. Hence, two extra bits are used in order to signal a run (although it is compensated from saving the bits for the skipped coefficients). This situation can be improved by considering the escape GCLI for the prediction, as follows: the first run encountered is signaled with a '-1', but if there is a run consecutively in the prediction direction (horizontally within the subband, vertically from the subband above), it is signaled with a 0. This prediction scheme is depicted in Fig. 10, $4^{th}$ line ("After runs with prediction from escape GCLI").

Therefore, in order to signal a second consecutive run, it may be enough to signal a zero '0'. This may be accomplished by predicting from the escape GCLI. However, on the contrary, if the next coefficient is not the start of a run, the prediction will need to recover from the escape GCLI, expending more bits for that. See Fig. 10 for an example. For coefficients 4 and 8, a value of zero '0' is used, since coefficient zero was signaled with a minus one '-1'. This '-1' value is employed for the prediction of coefficients four and eight. However, for coefficient twelve, we need to recover from the prediction from -1 by adding 1 (in order to reach the value '0'). It can be seen that the more consecutive runs, the more efficient will be their signaling with this method.

According to this embodiment, the inventive decoder 2 may be configured to decode for each of the $N^{th}$ coefficient groups (i.e. run head, e.g. group '4') its GCLI value differentially to a GCLI value of a preceding $N^{th}$ coefficient group (i.e. preceding run head, e.g. group '0') and to appoint the $N^{th}$ coefficient group (e.g. group '4') a consecutive start of a run if the GCLI value of the $N^{th}$ coefficient group (e.g. group '4') represents an escape GCLI code and to use said escape GCLI code for differentially decoding the GCLI values of any subsequent coefficient group (e.g. group '8').

In other words, if a second run 102 comes consecutively after a first run 101, another escape GCLI is signaled again for this second run. This may be a predetermined escape GCLI code (e.g. '-1'), as exemplarily depicted in Fig. 10, third line ("after runs"), or a zero, as exemplarily depicted in Fig. 10, fourth line ("after runs with prediction from Escape GCLI").

Also at the encoder side, escape GCLI codes may be assigned to consecutive run heads. According to such embodiments, the inventive encoder 20, after having determined a consecutive second run, may be configured to signal a zero as the GCLI value of the second $N^{th}$ coefficient group (i.e. run head) which is the start of said consecutive second run.

As mentioned above, escape GCLIs for run heads of consecutive runs may be predicted from the (optionally truncated) GCLI values, which may be clipped to zero, since no active/remaining bit planes may be transmitted. The decoder 2 may evaluate the escape GCLI code only to determine whether a run starts from the current coefficient group.

The decoding of the actual data on the coefficients may be performed based on the clipped value. And the prediction of the consecutive (truncated) GCLI value may be performed based on the clipped (truncated) GCLI value of the preceding coefficient group.

According to some examples, the analyzer 14 of the decoder 2 may be configured, when determining an escape value (e.g. the escape GCLI code value '-1') from the GCLI values 10 for a preceding one of the $N^{th}$ coefficient groups indicating the start of a run from the preceding coefficient group, to set the GCLI values for the preceding coefficient group to a value different from the escape GCLI code value (i.e. clipping). In other words, the decoder 2 may determine for the preceding coefficient group the escape GCLI code value, indicating e.g. that (-1) active/remaining bit planes were transmitted, from the data stream 22. To decode the actual data 8 on the coefficients 50 to 53, however, the (truncated) GCLI value may be clipped/set to zero, since in fact no active/remaining bit planes may have been transmitted.

Furthermore, the analyzer 14 may be configured to determine an escape value from the GCLI values for a current one of the $N^{th}$ coefficient groups indicating the start of a run from the current coefficient group based on the escape value from the preceding coefficient group (and not from the actual (truncated) GCLI value, which may indicate zero transmitted active/remaining bit planes). Thus, if the prediction of a current run is performed based on the escape value, i.e. (-1) transmitted bit planes, of the preceding coefficient group, the residual, i.e. the GCLI values, from the preceding coefficient group to the current coefficient group is zero. To signal zero, less bits may have to be used (e.g. from the variable length code) to encode the residual when compared to signaling the escape value again based on the actual (truncated) GCLI value, where (-1) would have to be transmitted.

The analyzer 14' of the encoder 20, respectively, may be configured, when determining a run starting from a preceding one of the $N^{th}$ coefficient groups, to set the GCLI value for the preceding group to an escape value (e.g. -1 transmitted active/remaining bit planes). The analyzer 14' may further be configured, when determining a run starting from a current one of the $N^{th}$ coefficient groups, to set the GCLI value for the current group to a value indicating the escape value based on the preceding escape value. This is the same concept as described above with respect to the decoder 2, wherein the encoder 20 may encode the respective residual values for consecutive runs of coefficient groups into the data stream 22 based on the escape (GCLI) value of the preceding coefficient group instead of from the actually transmitted bit planes of the preceding coefficient group.

In other words, the analyzer 14 of the decoder 2 may be configured to decode for each of the $N^{th}$ coefficient groups (i.e. run heads) a GCLI value by sequentially decoding the GCLI values differentially to an immediately preceding GCLI value and appoint an $N^{th}$ coefficient group the start of a run in case of the GCLI value of the respective group assuming an escape value so that the analyzer 14 may decode a zero for each $N^{th}$ coefficient group appointed the start of a run (e.g. second and subsequent run heads) immediately following any $N^{th}$ coefficient group which may also be appointed the start of a run (e.g first run head).

The corresponding analyzer 14' of the encoder 20 may be configured to encode for each of the $N^{th}$ coefficient groups (i.e. run heads) a GCLI value by sequentially encoding the GCLI values differentially to an immediately preceding GCLI value and appoint an $N^{th}$ coefficient group the start of a run in case of the GCLI value of the respective group assuming an escape value so that the analyzer 14' may encode a zero for each $N^{th}$ coefficient group appointed the start of a run (e.g. second and subsequent run heads) immediately following any $N^{th}$ coefficient group which may also be appointed the start of a run (e.g. first run head).

The standard alphabet employed for unary coding the GCLI residuals is defined for a range of values between -15 and 15. Therefore, special care has to be taken when using prediction from escape GCLI in the following situations:

a) Let assume that the value of the reference GCLI is 15, the GCLI to predict is 0 and the corresponding GTLI is also 0. If the coefficient group of the first of a run (so the following GCLIs within the subband are 0), then we need to signal a -1. In order to signal this -1, a residual value of -16 is computed. However, -16 is out of range in the standard alphabet for unary coding, and hence, forbidden.

b) Let assume that the value of the reference GCLI and its GTLI are both 0, and signaled a -1, the GCLI to predict is 15. In order to signal this situation, a residual value of +16 is computed. However, +16 is out of range in the standard alphabet for unary coding, and hence, forbidden.

Situation a) can be managed by taking these two alternatives:

1. Disable the zero-run-method for the whole precinct.
2. Disable the signaling of the escape GCLI for only that run.

A more conservative solution for situations a) and b) is just to disable signaling of escape GCLI when the GTLI is 0. This can be easily checked and considered in a subband basis. Moreover, note that the prediction from escape GCLI has to still be applied when GTLI is 0.

**Compatibility with different prediction modes**

It has to be noted that the spatial zero-run depends on the GCLI values themselves and not on the prediction residuals. This means that the decision when to skip GCLI values is agnostic to the chosen prediction method (except when no prediction is used, since the latter requires special handling of GTLI=0). This property may help to reduce implementation complexity, since the decision whether to skip a GCLI value only needs to be performed once independently of the number of available prediction methods. Only the rate savings achieved by the application of the zero-run coding depend on the concrete delta values and hence the selected prediction methods.

**Block Diagrams**

Fig. 11 shows a schematic block diagram of a decoder 2 according to embodiments illustrating the modules affected on the decoder side (bold printed box) for the zero-run coding. Here, only the GCLI decoder module 34 is extended with extra functionality, which will check the start of a run.

If an escape GCLI is recovered from the bitstream, then it means that a run head has been read and that a run starts in that point. Two actions will be performed: firstly, the GCLI value is clipped to 0, and second, insignificant truncated GCLIs are generated for an amount of runLength - 1 or until reaching the subband boundary.

The GCLI decoder module 34 may perform the operations of the analyzer 12 and partially the operations of the decoding unit 14. To be more precise, the GCLI decoder 34 may decode the GCLI values from the data stream 6 and analyze the same.

The parser 36 may previously split the data stream 6 into the GCLI values 10 and the data 8 on the coefficients. The GCLI values may be transmitted to the GCLI decoder, wherein the data 8 on the coefficients may be transmitted to an unpacker 38. The unpacker 38 may be configured to perform the second part of the operations of the decoding unit 12, i.e. the decoding of the data 8 on the coefficients from the data stream 6 to obtain the image data 4.

Fig. 12 depicts a simplified block diagram of the encoder 20 according to embodiments. It shows a transform unit 40 configured to perform e.g. a wavelet transform of the inbound image 4 to obtain the plurality of different subbands 41. On the plurality of different subbands 41, a downsampling may be applied in sampling unit 42 to obtain the coefficients 43 arranged into a sequence of groups of coefficients.

Based on these coefficients 43, the analyzer 14 performs the analysis of the coefficients to obtain the GCLI values 10 and the data 8 on the coefficients. The data 8 on the coefficients may be quantized in quantizer 46 and sign encoded in sign encoding unit 48 (c.f. Fig. 1) to prepare the data on the coefficients for encoding into the data stream 6 performed by the packing unit 56.

Based on the GCLI values, a budget computation unit is configured to determine a budget that is needed for the data stream 6 to transmit the GCLI values 10 and the data 8 on the coefficients. If the bit budget needed exceeds an available bit budget, the rate control unit 52 may apply a quantization threshold 28 (c.f. Fig. 1) to the data 8 on the coefficients or perform another bit saving operation.

Based on this information, the GCLI encoding unit 12' is configured to encode the GCLI values and to signal the number of available/remaining bit planes to the packing unit 56 forming (e.g. multiplexing) the data stream using the GCLI values 10 (e.g. the delta/residual values) and the data 8 on the coefficients into the data stream. Thus, the features of the encoding unit 12 of Fig. 3 are distributed to blocks 12', 48 and optionally 56 in the embodiment of Fig. 12.

To allow for the fixed zero run coding, the embodiment of Fig. 12 or the embodiment of Fig. 3 may be modified in that no extra modules are used, but the highlighted (bold framed) modules are extended. To be more precise, either the encoding unit 12 of the embodiment of Fig. 3, the GCLI encoding unit 12' of Fig. 12 or, independently from these modifications, the budget computation unit 50 of Fig. 12 may be extended. Especially, if no budget computation is performed, the budget computation unit 50 and the rate calculator 52 may be omitted from embodiment of Fig. 12. According to an embodiment, both, the budget computation and GCLI encoder of Fig. 12 should incorporate a new functionality to detect if a run occurs using the option with fixed runs having run heads only at each $N^{th}$ group of coefficients in the data stream.

In a hardware implementation this method may be performed by a lookahead loop (cf. the pseudo code revealing an exemplary encoding with fixed zero runs below) to determine if a given coefficient belongs to a run. Therefore, a solution would be to use a head-of-the run buffer, which indicates for every GTLI where a run starts. It can be calculated in the budget computation module, and employed later in GCLI encoder to output the bits of the corresponding GCLI or to skip those in a run.

In other words, the analyzer 14' (or the budget computation unit 50) is configured to apply at least two different quantization thresholds to the sequence of coefficient groups so as to determine runs starting from any one of an $N^{th}$ coefficient group (i.e. run head) for both of the two different quantization thresholds. This may be performed by having a look-up table for each possible run head, i.e. each group of coefficients of the $N^{th}$ coefficient group, and each possible quantization threshold, i.e. GTLI value. Additionally, the encoding unit 12 (or the GCLI encoding unit 12') is configured to estimate a bit budget of the output data stream for the different quantization thresholds and to encode the data 8 on the coefficients of the respective quantization threshold using a bit budget smaller than a maximum available bit budget.

## Block diagram for zero runs with prediction from escape GCLI

Fig. 13 shows a schematic block diagram of the decoder 2 according to an embodiment using prediction from escape GCLI values fixed run coding. Fig. 13 illustrates the modules affected on the decoder side for the zero-run coding with prediction from escape GCLI. Here, the GCLI decoder module is extended with extra functionality, which will check the start of a run. If an escape GCLI is recovered from the bitstream, then it means that a run starts in that point. Two actions are performed. Firstly, the GCLI value is clipped to 0, and second, insignificant truncated GCLIs are generated for an amount of runLength - 1 or until reaching the subband boundary.

Moreover, the decoder may keep track of the runs encountered. This is used for vertical prediction, since the run heads signaling the escape GCLI in the precinct above have to be taken into account. Thus, for each GCLI coefficient group in a run head position, the decoder checks if the one above was the start of a run. In this way, the escape GCLI value can be considered for the prediction, as described with respect to the section describing the prediction from escape GCLI.

In other words, the analyzer of the decoder according to embodiments may further be configured to store information whether a run starts at any coefficient group and to use this information to decode the GCLI values of coefficient groups of a further sequence of coefficients. The further sequence of coefficients may be a further precinct or any other sequence of coefficients. The information may be stored in the storage unit 58. However, the storage unit (or decoder run table) may comprise a size equal or greater than the number of coefficients in the sequence of coefficients times the maximum number of sequences within the data stream or any bundle of sequences such as the number of sequences within a slice. Fig. 11 further provides the description regarding the structure of the decoder except of the embodiment-specific changes.

## Encoder block diagram

Fig. 14 depicts an exemplary simplified block diagram of the encoder 20 according to embodiments. The description regarding the structure of the encoder 20, except of the embodiment specific implementations, can be obtained from Fig. 12.

It can be seen in Fig. 14 that an extra module 60 is used, and also the highlighted modules 12' and 50 are extended. The run table 60 is employed to keep track of those positions where a run starts, so that they can say if the escape GCLI value should be considered or not for the prediction. Both the budget computation and GCLI encoder should incorporate a new functionality to detect if a run occurs, following the definitions described with respect to the section "Principle of zero-run coding". Note that in case it is combined with fixed zero runs, the size of the run table is the same than the table used for significance flags, i.e. one element for each $N^{th}$ coefficient group and each sequence within the bundle of sequences which is described beforehand with respect to the corresponding decoder.

Otherwise, the table would be of a size having one element for each coefficient group and each sequence within the bundle of sequences. In other words, the analyzer is further configured to store information whether a run starts at any coefficient group of the $N^{th}$ coefficient groups and to use this information to decode the GCLI values of coefficients of the $N^{th}$ coefficient group of a further sequence of coefficients.

In a hardware implementation this method will use a look-ahead loop (cf. the pseudo code revealing an exemplary encoding with fixed zero runs below) to determine if a given coefficient belongs to a run. Therefore, a solution would be to use a head-of-the run buffer, which indicates for every GTLI where a run starts. It can be calculated in the budget computation module or the analyzer, and employed later in GCLI encoder unit to output the bits of the corresponding GCLI or to skip those in a run.

## Algorithm Definition

This following section gives a mathematically more detailed definition of the algorithm described above.

## Function Definitions

Let *a* be a coefficient group to be encoded. Then

*GCLI*(*a*): Returns the GCLI value of the coefficient group a
*PREF*(*a*): Returns the coefficient group used for predicting the GCLI value of coefficient group *a*
*GTLI*(*a, q*): Returns the GTLI value to apply for coefficient group *a* in case the precinct is encoded with scenario *q*

*SIZE*(*s*): Number of coefficient groups in subband s. If the subband has more than one line (when using two vertical decomposition levels), then assume only the size of one line.
*RUN*(*a*): Returns if the coefficient group a belongs to a (successful) zero run.
*RUNNEAD*(*a*) Returns if the coefficient group a is a run head, as defined in Section 4.1. It depends only in the position, so it is independent from being in a run or not. This function is always false for the first coefficient group in a subband horizontally predicted.
*RUNLENGTH*: Run length as predefined in the parameters. Optionally, it might be adapted in each subband.

**Forward GCLI prediction**

GCLI values may not be encoded as such. Instead, prediction residuals may be written in the bit stream. Thus, the following pseudo code is directed to predictive coding, but may be equally applied to raw encoding of the GCLI values.

According to embodiments, the encoder performs a forward prediction in order to compute a prediction residual $\delta$. Let $GCLI(F_2)$ be the GCLI value to encode and $GTLI(F_2)$ the quantization to apply. Moreover, let $GCLI(F_1) = GCLI(PREF(F_2))$ be the prediction reference and $GTLI(F_1) = GTLI(PREF(F_2))$ the corresponding quantization. Then the prediction residual $\delta$ is computed as follows:

$$\delta' = PRED\big(GCLI(F_2), GTLI(F_2), GCLI(F_1), GTLI(F_1)\big)$$
$$= \begin{cases} \max\big(GCLI(F_2), GTLI(F_2)\big) - \max\big(GCLI(F_1), GTLI(F_2)\big) & if\ GCLI(F_1) > GTLI(F_1) \\ \max\big(GCLI(F_2), GTLI(F_2)\big) - GTLI(F_2) & otherwise \end{cases}$$

**Extended GCLI prediction for escape GCLI values**

According to the proposed variant above, the prediction can be done from the escape GCLI to improve efficiency of consecutive runs. Then the prediction residual $\delta$ depends on whether the reference coefficient group was the start of a run or not. Hence, the prediction residual for a run head $\delta$ can be calculated with the alternative $PRED_{EG}$ function, as follows (assuming the escape GCLI value is GTLI-1):

$$\delta' = PRED_{EG}\big(GCLI(F_2), GTLI(F_2), GCLI(F_1), GTLI(F_1)\big)$$
$$= \begin{cases} PRED\big(GCLI(F_2), GTLI(F_2), GCLI(F_1), GTLI(F_1)\big) - 1 & if\ \neg RUN(F_1) \wedge RUN(F_2) \\ PRED\big(GCLI(F_2), GTLI(F_2), GCLI(F_1), GTLI(F_1)\big) + 1 & if\ RUN(F_1) \wedge \neg RUN(F_2) \\ PRED\big(GCLI(F_2), GTLI(F_2), GCLI(F_1), GTLI(F_1)\big) & otherwise \end{cases}$$

Note that for $PRED_{EG}$, when combined with fixed zero runs (cf. section "fixed runs" above), $F_2$ is a run head, but $F_1$ can be:

- In vertical prediction, the run head at the same position in precinct above.
- In horizontal prediction, the run tail or last element of the previous run.

Finally, the composed function is defined, in which the corresponding prediction function is applied to each coefficient group depending on whether it is a run head or not.

$$PRED_f\big(GCLI(F_2), GTLI(F_2), GCLI(F_1), GTLI(F_1)\big)$$
$$= \begin{cases} PRED_{EG}\big(GCLI(F_2), GTLI(F_2), GCLI(F_1), GTLI(F_1)\big) & if\ RUNHEAD(F_2) \\ PRED\big(GCLI(F_2), GTLI(F_2), GCLI(F_1), GTLI(F_1)\big) & otherwise \end{cases}$$

**Backward GCLI prediction**

The GCLI values signaled in the bit stream may be reconstructed by the decoder as follows. First of all, a quantized GCLI value $GCLI'(F_2)$ is computed:

$$\underbrace{GCLI'(F_2)}_{max(GCLI(F_2),GTLI(F_2))} = PRED^{-1}(GCLI(F_1), GTLI(F_1), GTLI(F_2), \delta')$$

$$= \delta' + \begin{cases} \max(GCLI(F_1), GTLI(F_2)) & if\ GCLI(F_1) > GTLI(F_1) \\ GTLI(F_2) & otherwise \end{cases}$$

Then the final GCLI value is computed by means of a clipping operation:

$$GCLI(F_2) = CLIP(GCLI'(F_2), GTLI(F_2)) = \begin{cases} 0 & if\ GCLI'(F_2) \leq GTLI(F_2) \\ GCLI'(F_2) & otherwise \end{cases}$$

<u>**Extended backward GCLI prediction for escape GCLI values**</u>

Again, a special function for the inverse prediction may be considered, considering if the reference values were or were not the escape GCLI.

$$PRED_{EG}^{-1}(GCLI(F_1), GTLI(F_1), GTLI(F_2), \delta')$$
$$= \begin{cases} PRED^{-1}(GCLI(F_1), GTLI(F_1), GTLI(F_2), \delta') - 1 & if\ RUN(F_1) \\ PRED^{-1}(GCLI(F_1), GTLI(F_1), GTLI(F_2), \delta') & otherwise \end{cases}$$

Similarly, when combined with fixed zero runs, we use this special function on run heads.

$$PRED_f^{-1}(GCLI(F_1), GTLI(F_1), GTLI(F_2), \delta')$$
$$= \begin{cases} PRED_{EG}^{-1}(GCLI(F_1), GTLI(F_1), GTLI(F_2), \delta') & if\ ISRUNHEAD(F_2) \\ PRED^{-1}(GCLI(F_1), GTLI(F_1), GTLI(F_2), \delta') & otherwise \end{cases}$$

<u>**Decoding a GCLI value with fixed zero runs**</u>

Let q be the quality parameter to apply for the current precinct. Then, for a subband s, *GCLI*(*a*) is decoded as follows:

for $0 \leq i < SIZE(s)$
$\delta'$ ← vlc_decode() *# unary decode a delta value*
$GCLI'(a_i) = PRED^{-1}(GCLI(PREF(a_i)), GTLI(PREF(a_i)), GTLI(a_i), \delta')$
$GCLI(a_i) = CLIP(GCLI'(a_i), GTLI(a_i))$ *# clip the value into a valid range*
if $GCLI'(a_i) < GTLI(a_i, q)$ *# if it is an escape GCLI value*
    j ← $MIN(i + RUNLENGTH, SIZE(s))$
    for $i < k < j$ *# perform the run: write 0's until next boundary*
        $GCLI(a_k) \leftarrow 0$
    end for
    i ← j
end if
end for

**Decoding a GCLI value with prediction from escape GCLI**

Let q be the quality parameter to apply for the current precinct. Then, for a subband s, *GCLI*(*a*) is decoded as follows:

for $0 \leq i < SIZE(s)$

$\delta'$ ← vlc_decode() # *unary decode a delta value*

$GCLI'(a_i) \leftarrow PRED_{EG}^{-1}(GCLI(PREF(a_i)), GTLI(PREF(a_i)), GTLI(a_i), \delta')$

$GCLI(a_i) \leftarrow CLIP(GCLI'(a_i), GTLI(a_i))$ # *clip the value into a valid range*

if $GCLI'(a_i) < GTLI(a_i, q)$ # *if it is an escape GCLI value*

  $RUN(a_i)$ ← TRUE # *set the run flag to TRUE to the run head*

  j ← $MIN(i + RUNLENGTH, SIZE(s))$

  for $i < k < j$ # *perform the run: write 0's until next boundary*

    $GCLI(a_k) \leftarrow 0$

    $RUN(a_k)$ ← TRUE # *set the run flag to TRUE to the whole run*

  end for

  i ← j

end if

end for

**Decoding a GCLI value with fixed zero runs and prediction from escape GCLI**

When combining the variants for fixed zero runs and prediction from escape GCLI, the decoder can be described as below stated.

Let q be the quality parameter to apply for the current precinct. Then, for a subband s, *GCLI*(*a*) is decoded as follows:

for $0 \leq i < SIZE(s)$

  $\delta'$ ← vlc_decode() # *unary decode a delta value*

  $GCLI'(a_i) \leftarrow PRED_{f}^{-1}(GCLI(PREF(a_i)), GTLI(PREF(a_i)), GTLI(a_i), \delta')$

  $GCLI(a_i) \leftarrow CLIP(GCLI'(a_i), GTLI(a_i))$ # *clip the value into a valid range*

  if $GCLI'(a_i) < GTLI(a_i, q)$ # *if it is an escape GCLI value*

    $RUN(a_i)$ ← TRUE # *set the run flag to TRUE to the run head*

    j ← $MIN(i + RUNLENGTH, SIZE(s))$

    for $i < k < j$ # *perform the run: write 0's until next boundary*

      $GCLI(a_k) \leftarrow 0$

```
                    RUN(a_k) ← TRUE     # set the run flag to TRUE to the whole run
                end for
                i ← j
            end if
        end for
```

**Encoding a GCLI value with fixed zero runs**

Let q be scenario to apply for the current precinct. Then the encoding of coefficient groups $a_i$ of subband s can be performed as follows:

```
runCounter = 0
for 0 ≤ i < SIZE(s)
    if GCLI(a_i) − GTLI(a_i, q) ≤ 0              # if insignificant truncated GCLI
        if i mod RUNLENGTH = 0                    # start a run only in run head positions
            runCounter ← 1
        else if runCounter ≥ 1          # or continue a run, when runCounter is not 0
            runCounter ← runCounter + 1          # (i.e. no significant GCLI found)
    else                     # if significant GCLI
        for i − runCounter ≤ j ≤ i     # encode while recovering from uncompleted run
            encode(PRED(GCLI(a_j), GTLI(a_j), GCLI(PREF(a_j)), GTLI(PREF(a_j))))
        end for
        runCounter ← 0                  # set to 0 the counter, to break the runs
    end if

    if runCounter = RUNLENGTH ∨ (runCounter > 0 ∧ i = SIZE(s) − 1) # if
completed run
        k ← i – runCounter              # only encode the head of the run with the
escape GCLI
        encode(PRED(GCLI(a_k), GTLI(a_k), GCLI(PREF(a_k)), GTLI(PREF(a_k))) − 1)
        runCounter ← 0                  # set to 0 the counter, to break the runs
    end if
end for
```

**Encoding a GCLI value with prediction from escape GCLI**

Let q be scenario to apply for the current precinct. Then the encoding of coefficient groups $a_i$ of subband s can be performed as follows:

runCounter = 0
for $0 \leq i < SIZE(s)$
    if $GCLI(a_i) - GTLI(a_i, q) \leq 0$ *# if insignificant truncated GCLI*
        runCounter ← runCounter + 1
    else *# if significant GCLI*
        for $i - runCounter \leq j \leq i$ *# encode it while recovering from uncompleted run*
            encode(
            $PRED_{EG}\left(GCLI(a_j), GTLI(a_j), GCLI\left(PREF(a_j)\right), GTLI\left(PREF(a_j)\right)\right)$)
        end for
        runCounter ← 0
    end if

    if $runCounter = RUNLENGTH \vee (runCounter > 0 \wedge i = SIZE(s) - 1)$ *# if completed run*
        k ← i – runCounter *# only encode the head of the run*
        for $k \leq g < j$
            $RUN(a_g)$ ← TRUE *# set the run flag to TRUE to the whole run*
        end for
        encode($PRED_{EG}(GCLI(a_k), GTLI(a_k), GCLI(PREF(a_k)), GTLI(PREF(a_k)))$)
        runCounter ← 0
    end if
end for

**Encoding a GCLI value with fixed zero run and prediction from escape GCLI**

Let q be scenario to apply for the current precinct. Then the encoding of coefficient groups $a_i$ of subband s can be performed as follows:

runCounter = 0

```
for 0 ≤ i < SIZE(s)
    if GCLI(a_i) − GTLI(a_i, q) ≤ 0            # if insignificant truncated GCLI
        if i mod RUNLENGTH = 0                  # start a run only in run head positions
            runCounter ← 1
        else if runCounter ≥ 1             # or continue a run, when runCounter is not 0
            runCounter ← runCounter + 1                 # (i.e. no significant
        GCLI found)
    else                                        # if significant GCLI
        for i − runCounter ≤ j ≤ i     # encode while recovering from uncompleted
run
            encode(
        PRED_f(GCLI(a_j), GTLI(a_j), GCLI(PREF(a_j)), GTLI(PREF(a_j))))
        end for
        runCounter ← 0                 # set to 0 the counter, to break the runs
    end if

    if runCounter = RUNLENGTH ∨ (runCounter > 0 ∧ i = SIZE(s) − 1) # if
completed run
        k ← i – runCounter    # only encode the head of the run with the escape
GCLI
        for k ≤ g < j
            RUN(a_g) ← TRUE                # set the run flag to TRUE to the whole
run
        end for
        encode(PRED_f(GCLI(a_k), GTLI(a_k), GCLI(PREF(a_k)), GTLI(PREF(a_k))))
        runCounter ← 0                 # set to 0 the counter, to break the runs
    end if
end for
```

**Parallel-friendly prediction from escape GCLI**

The prediction formulas introduced in Sections "Forward GCLI prediction" and "Backward GCLI prediction" are not the only ones that can be employed to predict GCLI values. The state of the art also includes the following formula as an alternative to the abovementioned one:

Alternative forward prediction:

$$\delta' = PRED_A\big(GCLI(F_2), GTLI(F_2), GCLI(F_1), GTLI(F_1)\big)$$
$$= \max\big(GCLI(F_2), GTLI(F_2)\big)$$
$$- \max(\max\big(GCLI(F_1), GTLI(F_1)\big), GTLI(F_2)\big)$$

Alternative backward prediction:

$$\underbrace{GCLI'(F_2)}_{max(GCLI(F_2),GTLI(F_2))} = PRED_A^{-1}(GCLI(F_1), GTLI(F_1), GTLI(F_2), \delta')$$
$$= \delta' + \max(\max\big(GCLI(F_1), GTLI(F_1)\big), GTLI(F_2)\big)$$

For increased parallel processing, it is required to handle the prediction from the escape GCLI value in a "natural way"; that is, the escape GCLI value is really employed as the reference value within the formula: $max(GCLI(F_1), GTLI(F_1))$. In this way, predicting from escape GCLI can be done in a transparent way.

However, none of these prediction methods do not allow to replace the reference GCLI value by the escape GCLI value (in the corresponding case), since this special signaled value gets "filtered" by $GTLI(F_2)$. Indeed, in the prediction formula in Section "Forward GCLI prediction", whenever the reference value is an escape GCLI value ($GCLI(F_1) < GTLI(F_1)$), then it is replaced by $GTLI(F_2)$. In the formula here discussed, the prediction from escape GCLI would take effect only and only if $GTLI(F_1) > GTLI(F_2)$. Therefore, we need to modify the residuals accordingly as discussed in the algorithms of Sections "Decoding a GCLI value" and "Encoding a GCLI value".

An alternative to this is to introduce a new prediction method that brings prediction from the escape GCLI in a natural way, since the reference GCLI is always used as is, and never filtered by other values. Nevertheless, the coding efficiency of this method is much lower, but will permit massively parallel processing while bringing prediction from escape GCLI.

Proposed forward prediction:

$$\delta' = PRED_P\big(GCLI(F_2), GTLI(F_2), GCLI(F_1), GTLI(F_1)\big)$$
$$= \max\big(GCLI(F_2), GTLI(F_2)\big) - \max\big(GCLI(F_1), GTLI(F_1)\big)$$

Proposed backward prediction:

$$\underbrace{GCLI'(F_2)}_{max(GCLI(F_2),GTLI(F_2))} = PRED_P^{-1}(GCLI(F_1), GTLI(F_1), GTLI(F_2), \delta')$$
$$= \delta' + \max(GCLI(F_1), GTLI(F_1))$$

This parallel-friendly prediction formula is recommended to be employed only for run heads where the prediction from escape GCLI takes place effectively.

## Data stream structure

It shall be pointed out that the code streams (also referred to as data streams) discussed in the following section are meant to signal precincts. However, the same principle can be applied also when this code stream structure is employed to signal single subbands or subpackets, wherein normally a subpacket is employed for each line of a precinct. The code streams shown in this section are only exemplarily meant to focus on the GCLI field. In fact, the Data field structure can vary, and indeed, it might not include a separate field for signs (removing the sign field and the HS header).

## Code stream for vertically predicted precincts

As introduced with respect to the "fixed runs" section, the fixed zero runs method only considers runs starting in a position multiple of the run length. For example, with reference to Figure 9 it was described how the positions where a run can start may be distributed in a precinct. Or more specifically, in Fig. 10, positions 0, 4, 8 and 12. These positions, that are actually coefficient groups, are called *run heads.*

In other words, they are the allowed starting points for making runs, regardless if they are part of a run or not. Run heads are all separated from each other by a number of GCLIs equal to the run length within a subband. The first element of a subband is always a run head in vertical prediction (and also for horizontal prediction for some variants, as will be discussed below). According to this method, the run heads are always encoded. Indeed, whether with the corresponding truncated GCLI or with the escape GCLI value.

In order to enable massively parallel processing of the $GCLI_S$, as discussed above, the code stream should be able to give information about the missing GCLIs beforehand. In this way, threads can easily distribute the items between them. However, the information of the runs (missing coefficient groups in the code stream) is typically not initially available in the code stream, since the escape GCLI value is obtained after applying the prediction to the run heads.

Since the knowledge about which coefficients groups were skipped in the code stream relays in the run heads, having them before the rest of coefficient groups will enable massively parallel processing. This can be achieved by interleaving the run heads at the beginning of the code stream, as follows:

According to embodiments, run heads are sent before the rest of GCLIs. In this way, once the inverse prediction is performed, the GCLIs encoding the escape GCLI values are known, and hence, the missing GCLIs (in groups of size "run length - 1") are known.

The exemplary code streams shown in Fig. 15, Fig. 16 and Fig. 17 focus on the GCLI field 62. In fact, the data field structure can vary, and indeed, it might not include a separate field for signs (removing the sign field and the HS header). The data stream structure of Fig. 15 is suitable for the fixed zero runs method. Run heads 62a are signaled separately, before the rest of GCLIs 62b. HG 64 is the header for GCLIs (e.g. the size of the header in bits), HD 66 and HS 68 the headers for data 70 and sign 72 fields, as originally defined in the data stream.

According to embodiments, the decoder 2 may be configured to perform a vertical prediction (i.e. vertical differential decoding), wherein a first coefficient group is located in a first line of a subband and a preceding coefficient group is located in a second line of the same subband but above or below the first line of this subband.

## Code stream for horizontally predicted precincts

The scheme as described in the section above can be employed advantageously with vertical prediction. However, the inventive decoder may also be configured to perform horizontal prediction.

According to such an embodiment, the decoder 2 may be configured to perform a horizontal prediction (i.e. horizontal differential decoding), wherein a first coefficient group is located in the same line of the same subband than a preceding second coefficient group.

In horizontal prediction, run heads are predicted from the corresponding, previous coefficient groups in the subband. Therefore, interleaving the run heads to the beginning will break the prediction chain. That is, there is no way to do the inverse prediction to the run heads before processing the rest of $GCLI_S$, as shown exemplarily in Figure 18.

Figure 18 shows a prediction chain in horizontal. The squares 181, 182, 183 are run heads, and in the example, run head 182 of position four is a run since GCLIs for coefficient groups five, six and seven are missing. It can be seen that interleaving the run heads to the beginning of the code stream (Fig. 18 bottom) may affect the order of prediction.

Therefore, two different code streams may be required for precincts which GCLIs are predicted horizontally or vertically, as shown in Figure 16 and Figure 17. In Figure 16, two different code streams for horizontally predicted precincts (Fig. 16 top) and vertically predicted precincts (Fig. 16 bottom) are depicted. For horizontally predicted code streams, the scheme may be the original one and zero runs may be applied so that run heads are at their corresponding positions in the code stream.

Again, HG 64 is header for GCLIs, HD 66 is header for data and HS 68 is header for sign packing.

Figure 17 shows an example of a slice 169 with eleven precincts with two horizontally predicted precincts 170, 171 and nine vertically predicted precincts 172 to 180.

However, leaving the run heads in their corresponding positions in the code stream may not be a good solution for massively parallel processing: the gaps introduced by fixed zero-run method may not allow knowing in advance where a subband starts in the code stream.

For this purpose, the following four methods are discussed for coping with massively parallel processing of horizontal prediction with fixed zero-runs.

## Method 1: Disable fixed zero runs in horizontal prediction

This may be a very easy solution. When using horizontal prediction, the spatial zero-runs method shall not be used according to this method.

In this case, two different code streams may be used for precincts in which GCLIs are predicted horizontally or vertically, as shown in Figure 16, but without run heads for horizontal prediction. Each design may enable the parallel inverse prediction of horizontal and vertical prediction chains, respectively.

**Method 2: Subband headers in the code stream**

Another alternative may be to provide headers 191, 192, 193 in the code stream that point to the starting positions of the subbands, as exemplarily shown in Figure 19. The headers 191, 192, 193 can be relative to each other in order to decrease their size. A header for the very first subband may be omitted.

Figure 19 shows a code stream for a horizontally predicted precinct. For such a horizontally predicted code stream, a set of headers 191, 192, 193 (H1, H2, H3 in Figure 19) may be provided for, at least, each subband in the highest resolution level (vertical lines within GCLI field in Figure 19) except for the first one. HG is header for $GCLI_S$, HD is header for Data and HS is header for sign packing.

**Method 3: Intersubband prediction**

Since the major problem with horizontal prediction and zero runs is that threads do not know where the subband boundaries are in the code stream, a solution to this is to remove these boundaries.

According to this third method, the first coefficient group of each subband (except the first one) may be predicted from the last coefficient group of the preceding subband (following the order they are disposed in the code stream). In this way, a massively parallel processing can be carried out without problems since, with this third method, where a subband starts may be of less importance when performing backwards prediction before knowing the runs. That is, the inverse prediction may be finished only after the runs (given by escape GCLI values) are found and processed, what will help to establish again the subband boundaries into their correct positions.

According to such embodiments, the inventive decoder 2 may be configured to perform a vertical differential decoding, wherein at least one of the coefficient groups is located in a first line of a subband of the frequency transform of the image data and the preceding coefficient group is located in a second line of the subband above or below the first line. Additionally or alternatively, the inventive decoder 2 may be configured to perform a horizontal differential decoding, wherein the at least one of the coefficient groups is located in the first line of the subband and the preceding coefficient group is located in a first line of a different subband.

Figure 20 shows an exemplary excerpt of the code stream corresponding to the GCLI field. The vertical lines show where the boundaries between subbands are located. Arrows at the bottom shows the prediction direction, so that the first element of a subband may be predicted from the last in the preceding one.

**Method 4: Coding run heads separately**

Another solution to the problem discussed at the beginning of section "Code stream for horizontally predicted precincts" is to break the prediction chain as exemplarily shown in Figure 18 in such a way that the prediction applied to run heads is made independently to the rest of GCLIs: the reference GCLI for a run head is the previous run head within the subband, and the reference for a GCLI right after a run head is the GCLI right before the run head. Next equation gives the index within the subband of the reference for a coefficient group in position i.

$$PREF(F_i) = \begin{cases} F_{i-1}, if\ i\ mod\ runLength\ > 1 \\ F_{i-2}, if\ i\ mod\ runLength = 1 \\ F_{i-runLength}, if\ i\ mod\ runLength = 0\ and\ i > 0 \end{cases}$$

In this way, there are two horizontal prediction chains per subband, one applied for the run heads another to the rest of GCLIs. Hence, a backwards prediction applied to the run heads first will provide the required information to find the runs later on. An example following the one in Figure 18 is shown in Figure 21A.

Figure 21A shows prediction chains in horizontal. Squares 210, 211, 212 are run heads, and in the example, run head 211 of position four is a run (since GCLIs for coefficient groups five, six and seven are missing). It can be seen that run heads are predicted taking as reference the previous run head in the subband. For the rest of the $GCLI_S$, if the reference was deleted, it is known that it was a ’0’ already.

A variant is to keep the prediction of the second GCLI of a run with respect to the corresponding run head. In this way, GCLIs of a run form a short prediction chain starting from the run head, making it easier for the decoder since it doesn’t need to know which one were missing (only need to compute which run head is the reference). This is shown in Figure 21B and in the next equation:

$$PREF(F_i) = \begin{cases} F_{i-1}, if\ i\ mod\ runLength\ \geq 1 \\ F_{i-runLength}, if\ i\ mod\ runLength = 0\ and\ i > 0 \end{cases}$$

Figure 21B shows prediction chains in horizontal. Squares 210, 211, 212 are run heads, and in the example, run head 211 of position four is a run (since GCLIs for coefficient groups five, six and seven are missing). It can be seen that run heads are predicted taking as reference the previous run head in the subband. For the rest of the GCLIs, they are predicted from the preceding one, and the one after a run takes the run head as a reference.

The prediction applied to run heads, as introduced above, is applied within a subband. Hence, the first of each subband must be signaled in raw. Alternatively, it can be predicted from the last run head of the previous subband. Or furthermore, all run heads can be signaled in raw, without prediction, when GTLI>0.

With all of these, the code stream with this method will remain similarly as for vertical prediction, as shown in Figure 15. Therefore, the code stream structure remains homogeneous for both horizontal and vertical prediction.

Again, it is important to point out that the shown data streams above were meant to signal precincts. Fig. 17 reveals an exemplary slice of 11 precincts, with two horizontally predicted and nine vertically. However, the same principle can be applied also when this data stream structure is employed to signal single subbands or subpackets (i.e. a set of subbands).

As discussed above, the data stream with horizontal prediction using fixed zero runs can remain unchanged. However, the gaps introduced by fixed zero-run method can also interfere with the massively parallel processing of GCLIs along the subbands. Thus, it may not be possible to know where a subband starts in the data stream. However, this is crucial if the subbands are coded independently.

The above discussion, thus, revealed, inter alias, the following concepts:

1. Enable an intersubband prediction, where the first GCLI of a subband is predicted from the last GCLI of the previously disposed subband in the codestream. This enables signaling the escape GCLI value also at the very beginning of the subband.
In other words, the analyzer of the encoder may be, according to embodiments, configured to determine a first GCLI value of a coefficient group of a current subband based on a coefficient group of a preceding subband. Regarding the decoder, the decoding unit may be configured to determine the data on the coefficients based on a first GCLI value of a coefficient group of a current subband and a coefficient group of a preceding subband.
2. Run heads are coded in raw, as explained above. Hence, horizontal prediction with zero runs will be enabled only when GTLI > 0, as discussed above.
In other words, the encoding unit may be configured to encode the GCLI values of the coefficient groups of the $N^{th}$ coefficient groups in raw, wherein the GCLI values of the remaining coefficient groups is encoded with respect to a preceding coefficient group. The respective decoder may comprise a decoding unit configured to decode the GCLI values of the coefficient groups of the $N^{th}$ coefficient groups in raw and to decode the GCLI values of the remaining coefficient groups with respect to a preceding coefficient group.
3. Introduce headers in the codestream that point to the starting position of each subband. Here, the first element of the subband can signal a run provided that GTLI > 0, since in horizontal prediction, the first GCLIs of the subbands are typically signaled in RAW.
In other words, the encoding unit may be configured to signal a position of a first coefficient group of each subband in the data stream prior to encoding the GCLI values of the $N^{th}$ coefficient groups of a first subband. The corresponding analyzer of the decoder may determine the position of the first coefficient group of each subband in the data stream prior to determining the GCLI values of the $N^{th}$ coefficient groups of a first subband.
4. Disable fixed zero runs in horizontal prediction.

Although the present invention has been described in the context of block diagrams where the blocks represent actual or logical hardware components, the present invention can also be implemented by a computer-implemented method. In the latter case, the blocks represent corresponding method steps where these steps stand for the functionalities performed by corresponding logical or physical hardware blocks.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The inventive transmitted or encoded signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive method is, therefore, a data carrier (or a non-transitory storage medium such as a digital storage medium, or a computer-readable medium) comprising, recorded thereon, the computer program for performing one of the methods described herein. The data carrier, the digital storage medium or the recorded medium are typically tangible and/or non-transitory.

A further embodiment of the invention method is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

Further, the following embodiments are derivable from the above description:

1. Decoder (2) for decoding image data (4) from a data stream (6) comprising data on coefficients (8) obtained from a frequency transform of the image data, and data on Greatest Coded Line Index (GCLI) values (10), each related to a group of coefficients of a sequence of groups of coefficients, the decoder (2) comprising:

    a decoding unit (12) for decoding the data on the GCLI values (10) with decoding the data on the GCLI values for each Nth group of coefficients of the sequence of groups of coefficients prior to remaining groups of coefficients of the sequence of coefficients, wherein N is greater or equal than 2;

    an analyzer (14) for analyzing the data on the GCLI values (10) for each Nth group of coefficients so as to determine runs of groups of coefficients starting with any of the Nth group of coefficients;

    wherein the decoding unit (12) is further configured to decode the data on the coefficients being part of a run of groups of coefficients using an escape decoding mechanism and to decode the data on the remaining coefficients from the data stream to obtain the image data.

2. Decoder (2) according to embodiment 1, wherein the decoding unit (12) is configured to allocate zero values to the respective coefficient groups of a run of coefficient groups as to perform the escape decoding mechanism.

3. Decoder(2) according to any of embodiments 1 or 2, wherein the analyzer is configured to analyze the data on the GCLI values to determine whether an indicated number of bit planes to be transmitted for a coefficient group of any of the groups of coefficients of the Nth group of coefficients is outside a presumed value range of the number of bit planes indicating an escape value as to determine the start of a run of groups of coefficients from a respective coefficient group.

4. Decoder (2) according to any of embodiments 1 to 3,
wherein the analyzer is configured, when determining an escape value from the data on the GCLI values for a preceding group of the Nth group of coefficients indicating the start of a run of groups of coefficients from the preceding group of coefficients, to set the data on the GCLI values for the preceding group to a value different from the escape value; and
wherein the analyzer is further configured to determine an escape value from the data on the GCLI values for a current group of the Nth group of coefficients indicating the start of a run of groups of coefficients from the current group of coefficients based on the escape value from the preceding group.

5. Decoder (2) according to any of embodiments 1 to 3,
wherein the analyzer is configured to decode for each of the Nth groups of coefficients a GCLI value by sequentially decoding the GCLI values differentially to an immediately preceding GCLI value and appoint a Nth group of coefficients the start of a run of groups of coefficients in case of the GCLI value of the respective GCLI value assuming an escape value so that the analyzer decodes a zero for each Nth group of coefficients appointed the start of a run of groups of coefficients immediately following any Nth group of coefficients which is also appointed the start of a run of groups of coefficients.

6. Decoder according to any of embodiment 1 to 5,
wherein the analyzer is further configured to store information whether a run starts at any coefficient group of the Nth coefficient groups and to use this information to decode the data on the GCLI values of coefficients of the Nth group of coefficients of a further sequence of coefficients.

7. Decoder according to any of embodiments 1 to 6,
wherein the decoding unit is configured to determine the GCLI data on the coefficients based on a first GCLI value of a group of coefficients of a current subband and a group of coefficients of a preceding subband.

8. Decoder according to any of embodiments 1 to 7,
wherein the decoding unit is configured to decode the data on the GCLI values of the groups of coefficients of the Nth groups of coefficients in raw and to decode the data on the GCLI values of the remaining groups of coefficients respect to a preceding group of coefficients.

9. Decoder according to any of embodiments 1 to 8,
wherein the analyzer is configured to determine a position of a first group of coefficients of each subband in the data stream prior to determining the data on the GCLI values of the Nth groups of coefficients of a first subband.

10. Encoder (20) for encoding image data (4) into a data stream (6), the image data (4) being decomposed into a plurality of different subbands, each subband comprising a plurality of coefficients, wherein the plurality of coefficients are arranged into a sequence of groups of coefficients, the encoder (20) comprising:

an analyzer (14) configured to analyze the sequence of groups of coefficients so as to determine runs of groups of coefficients starting from any of an Nth group of coefficients, wherein N is greater or equal than 2, and to determine, for the sequence of groups of coefficients, data on Greatest Coded Line Index (GCLI) values based on the determined runs of groups of coefficients;

an encoding unit (12) for encoding the data on the Greatest Coded Line Index values and data on the coefficient groups of a run of coefficient groups using an escape encoding mechanism and to encode the remaining data on the Greatest Coded Line Index values and the remaining data on the coefficient groups into the data stream.

11. Encoder (20) according to embodiment 10, wherein the encoding unit is configured to form the data stream such that the data on the Greatest Coded Line Index values regarding the groups of coefficients of the Nth groups of coefficients is arranged prior to the data on the Greatest Coded Line Index values regarding the remaining groups of coefficients.

12. Encoder (20) according to any of embodiments 10 to 11, wherein the analyzer is configured to determine whether the data on subsequent groups of coefficients is zero,
wherein a number of the subsequent groups of coefficients is equal to a predetermined run length value as to determine a run of coefficient groups.

13. Encoder (20) according to any of embodiment 10 to 12, wherein the encoding unit is configured to set the data on the Greatest Coded Line Index value of the groups of coefficients being the start of a run of coefficient groups to an escape value such that an indicated number of bit planes to be transmitted for the groups of coefficients of the Nth group of coefficients being the start of a run of coefficient groups is outside a presumed value range of the number of bit planes as to indicate the start of the run of coefficients.

14. Encoder (20) according to any of embodiments 10 to 13,
wherein the analyzer is configured, when determining a run of groups of coefficients starting from a preceding group of the Nth group of coefficients, to set the data on the GCLI value for the preceding group to an escape value; and wherein the analyzer is further configured, when determining a run of groups of coefficients starting from a current group of the Nth group of coefficients, to set the data on the GCLI value for the current group to a value indicating the escape value based on the preceding escape value.

15. Encoder (20) according to any of embodiment 9 to 14, wherein the analyzer is configured to encode for each of the Nth groups of coefficients a GCLI value by sequentially encoding the GCLI values differentially to an immediately preceding GCLI value and appoint a Nth group of coefficients the start of a run of groups of coefficients in case of the GCLI value of the respective GCLI value assuming an escape value so that the analyzer encodes a zero for each Nth group of coefficients appointed the start of a run of groups of coefficients immediately following any Nth group of coefficients which is also appointed the start of a run of groups of coefficients.

16. Encoder (20) according any of embodiments 10 to 15,
wherein the analyzer is configured to apply at least two different quantization thresholds to the sequence of groups of coefficients as to determine runs of groups of coefficients starting from any of an Nth group of coefficients for both of the two different quantization thresholds;
wherein the encoding unit is configured to estimate a bit budget of the output data stream for the different quantization thresholds and to encode the data on the coefficients of the respective quantization threshold using a bit budget smaller than a maximum available bit budget.

17. Encoder (20) according any of embodiment 10 to 16,
wherein the analyzer is further configured to store information whether a run starts at any coefficient group of the Nth coefficient groups and to use this information to encode the data on the GCLI values of coefficients of the Nth group of coefficients of a further sequence of coefficients.

18. Encoder (20) according to any of embodiments 10 to 17, wherein the analyzer is configured to determine data on a first GCLI value of a group of coefficients of a current subband based on a group of coefficients of a preceding subband.

19. Encoder (20) according to any of embodiments 10 to 18, wherein the encoding unit is configured to encode the data on the GCLI values of the groups of coefficients of the Nth groups of coefficients in raw, wherein encoding unit is configured to encode the data on the GCLI values of the remaining groups of coefficients with respect to a preceding group of coefficients.

20. Encoder (20) according to any of embodiments 10 to 19, wherein the encoding unit is configured to signal a position of a first group of coefficients of each subband in the data stream prior to encoding the data on the GCLI values of the Nth groups of coefficients of a first subband.

21. Data stream (22) comprising data on coefficients (8) obtained from a frequency transform of the image data and data on Greatest Coded Line Index (GCLI) values (10), each related to a group of coefficients of a sequence of groups of coefficients, wherein the data on the Greatest Coded Line Index values for each Nth group of coefficients (10a) is arranged prior to the remaining data on the Greatest Coded Line Index values (10b) and the data on the coefficients (8).

22. Method for decoding image data (4) from a data stream (6) comprising data on coefficients (8) obtained from a frequency transform of the image data and data on Greatest Coded Line Index (GCLI) values (10), each related to a group of coefficients of a sequence of groups of coefficients, the method comprising:

decoding the data on the GCLI values (10) with decoding the data on the GCLI values for each Nth group of coefficients of the sequence of groups of coefficients prior to remaining groups of coefficients of the sequence of coefficients, wherein N is greater or equal than 2;

analyzing the data on the GCLI values (10) for each Nth group of coefficients so as to determine runs of groups of coefficients starting with any of the Nth group of coefficients;

decoding the data on the coefficients being part of a run of groups of coefficients using an escape decoding mechanism and to decode the data on the remaining coefficients from the data stream to obtain the image data.

23. Method for encoding image data (4) into a data stream (6), the image data (4) being decomposed into a plurality of different subbands, each subband comprising a plurality of coefficients, wherein the plurality of coefficients are arranged into a sequence of groups of coefficients, the method comprising:

analyzing the sequence of groups of coefficients so as to determine runs of groups of coefficients starting from any of an Nth group of coefficients, wherein N is greater or equal than 2, and to determine, for the sequence of groups of coefficients, data on Greatest Coded Line Index (GCLI) values based on the determined runs of groups of coefficients;

encoding the data on the Greatest Coded Line Index values and data on the coefficient groups of a run of coefficient groups using an escape encoding mechanism and to encode the remaining data on the Greatest Coded Line Index values and the remaining data on the coefficient groups into the data stream.

According to some of the above embodiments a decoder may be provided for decoding image data from a data stream comprising data on coefficients obtained from a frequency transform of the image data and data on Greatest Coded Line Index (GCLI) values, each related to a group of coefficients of a sequence of groups of coefficients. The decoder may comprise a decoding unit and an analyzer. The decoding unit may be configured for decoding the data on the GCLI values with decoding the data on the GCLI values for each Nth group of coefficients of the sequence of groups of coefficients prior to remaining groups of coefficients of the sequence of coefficients, wherein N is greater or equal than 2. The analyzer may analyze the data on the GCLI values for each Nth group of coefficients so as to determine runs of groups of coefficients starting with any of the Nth group of coefficients. Furthermore, the decoding unit may be configured to decode the data on the groups of coefficients being part of a runs of groups of coefficients using an escape decoding mechanism and to decode the data on the remaining coefficients from the data stream to obtain the image data.

An encoder according to some of the above embodiments may be configured to encode image data into a data stream, the image data being decomposed into a plurality of different subbands, each subband comprising a plurality of coefficients, wherein the plurality of coefficients are arranged into a sequence of groups of coefficients. The encoder may comprise an analyzer and an encoding unit. The analyzer may be configured to analyze the sequence of groups of coefficients so as to determine runs of groups of coefficients starting from any of an Nth group of coefficients, wherein N is greater or equal than 2, and to determine, for the sequence of groups of coefficients, data on Greatest Coded Line Index (GCLI) values based on the determined runs of groups of coefficients. The encoding unit may be configured for encoding the data on the Greatest Coded Line Index values and the data on the coefficient groups of a run of coefficient groups using an escape encoding mechanism and to encode the remaining data on the Greatest Coded Line Index values and the remaining data on the coefficient groups into the data stream.

An idea of the present disclosure may be directed to allow only a number of predetermined candidates of group of coefficients, i.e. the Nth groups of coefficients, to be the starting group of a run (or to be in a starting position). The groups of coefficients of the Nth group of coefficients may also be referred to as run heads. In other words, an escape coding mechanism may be signaled at any of the Nth group of coefficients (run heads), but not at the groups of coefficients being different from the Nth group of coefficients. This may be especially advantageous for vertical predictive coding, where a prediction of the run heads may be performed from a first subband line (or spectral line) to the respective run head of a further subband line. Additionally, the remaining coefficient groups may be coded based on the run heads. Thus, it may be possible to distribute the coding packages to the different kernels of a (massively) parallel computation system since the encoder and the decoder know the positions the groups of coefficients of the Nth group of coefficients, wherein the remaining groups of coefficients can be predicted from the groups of coefficients of the Nth group of coefficients. In other words, the run heads may not depend on any of the remaining groups of coefficients, which leads to the possibility to distribute the coding of the remaining coefficient groups to different computation systems after the groups of coefficients of the Nth groups of coefficients are determined/coded.

According to some of the above embodiments the encoder may be configured to form the data stream such that the data on the Greatest Coded Line Index values regarding the groups of coefficients of the Nth groups of coefficients may be arranged prior to the data on the Greatest Coded Line Index values regarding the remaining groups of coefficients. This is advantageous since the output data stream may be provided with a form that is more intuitively decodable. In other words, the decoder may decode any of the of the Nth groups of coefficients directly in coding order without "jumping" within the codestream to the positions of the run heads. This jumping may further only be possible if e.g. a suitable header is used to indicate the positions of the coefficient groups of the Nth groups of coefficients. However, in the described embodiment, the decoder may obtain the run heads directly in coding order.

The data stream according to some of the above embodiments may comprise image data and data on Greatest Coded Line Index values. The image data may be decomposed into a plurality of different subbands, each subband comprising a plurality of coefficients, wherein the plurality of coefficients are arranged into a sequence of groups of coefficients. The image data and the data on the Greatest Coded Line Index values may be arranged into the data stream in that the data on the Greatest Coded Line Index values for each Nth group of coefficients is arranged prior to the remaining data on the Greatest Coded Line Index values and the image data.

According to some of the above embodiments the decoding unit may be configured to allocate zero values to the respective coefficient groups of a run of coefficient groups so as to perform the escape decoding mechanism. Respectively, the analyzer of the encoder may, in some of the above embodiments, be configured to determine whether the data on subsequent groups of coefficients is zero (after truncation), wherein a number of the subsequent groups of coefficients is equal to a predetermined run length value so as to determine a run of coefficient groups. This is advantageous, since data on GCLI values of zero valued groups of coefficients, where only zero values are transmitted for the respective coefficient data, may be omitted from transmission as well as the zero values itself if several consecutive groups of coefficients are zero. This saves data rate by omitting to encode/transmit bit values having (nearly) no information content. In other words, the information content of the bits may be compressed into signaling one escape value as described herein.

According to some of the above embodiments the analyzer of the decoder may be configured to analyze the data on the GCLI values to determine whether an indicated number of bit planes to be transmitted for a coefficient group of any of the groups of coefficients of the Nth group of coefficients is outside a presumed (or valid) value range of the number of bit planes indicating an escape value so as to determine the start of a run of groups of coefficients from a respective coefficient group.

Some of the above embodiments may further be directed to the respective encoding unit that may be configured to set the data on the Greatest Coded Line Index value of the groups of coefficients being the start of a run of coefficient groups to an escape value such that an indicated number of bit planes to be transmitted for the groups of coefficients of the Nth group of coefficients being the start of a run of coefficient groups is outside a valid value range of the number of bit planes as to indicate the start of the run of coefficients.

This is advantageous since the decoder may know directly from receiving an impossible number of bit planes that this is an escape value. Using the escape value and knowing the escape mechanism, e.g. leaving out a predetermined number of consecutive zero valued groups of coefficients as described herein, may lead to an efficient transmission of the information content of the runs of groups of coefficients.

According to some of the above embodiments the analyzer of the decoder may be configured, when determining an escape value from the data on the GCLI values for a preceding group of the Nth group of coefficients indicating the start of a run of groups of coefficients from the preceding group of coefficients, to set the data on the GCLI values for the preceding group to a value different from the escape value. Additionally, the analyzer may be further configured to determine an escape value from the data on the GCLI values for a current group of the Nth group of coefficients indicating the start of a run of groups of coefficients from the current group of coefficients based on the escape value from the preceding group.

According to some of the above embodiments the respective analyzer of the encoder may be configured, when determining a run of groups of coefficients starting from a preceding group of the Nth group of coefficients, to set the data on the GCLI value for the preceding group to an escape value. The analyzer may further be configured, when determining a run of groups of coefficients starting from a current group of the Nth group of coefficients, to set the data on the GCLI value for the current group to a value indicating the escape value based on the preceding escape value.

When having determined the escape value of a current group of coefficients, which may be predicted from a preceding group of coefficients, the GCLI value indicating the number of transmitted bit planes for the current coefficient may be set to zero if the above described zero-run escape coding mechanism is applied, in order to allow the decoder to decode the data on the coefficients without any modification. However, a prediction from the escape value, e.g. '-1' is more efficient for multiple zero runs in a row, since 0 is transmitted to indicate the subsequent zero run, instead of '-1' if the prediction is performed on the actual GCLI value of the decoder indicating the number of transmitted bit planes of the preceding coefficient group, i.e. 0. In this case '-1' would have to be transmitted to signal the subsequent escape value which uses more bits in the data stream than encoding 0.

According to some of the above embodiments the analyzer of the decoder may be configured to store information whether a run starts at any coefficient group of the Nth coefficient groups and to use this information to decode the data on the GCLI values of coefficients of the Nth group of coefficients of a further sequence of coefficients.

According to some of the above embodiments the respective analyzer of the encoder may be configured to store information whether a run starts at any coefficient group of the Nth coefficient groups and to use this information to encode the data on the GCLI values of coefficients of the Nth group of coefficients of a further sequence of coefficients.

This is advantageous for massive parallel processing of the data stream. Therefore, any information of the structure of the data on the coefficient groups may be valuable to perform the parallel processing on a greater number of parallel threads. Thus, a table indicating the zero runs may lead to the knowledge where information on coefficient groups may be omitted to be encoded in the data stream.

According to some of the above embodiments the decoding unit may be configured to determine the data on the coefficients based on a first GCLI value of a group of coefficients of a current subband and a group of coefficients of a preceding subband.

According to some of the above embodiments the respective analyzer of the encoder may be configured to determine data on a first GCLI value of a group of coefficients of a current subband based on a group of coefficients of a preceding subband.

According to some of the above embodiments the decoding unit may be configured to decode the data on the GCLI values of the groups of coefficients of the Nth groups of coefficients in raw and to decode the data on the GCLI values of the remaining groups of coefficients respect to a preceding group of coefficients.

According to some of the above embodiments the encoding unit may be configured to encode the data on the GCLI values of the groups of coefficients of the Nth groups of coefficients in raw, wherein the encoding unit may be configured to encode the data on the GCLI values of the remaining groups of coefficients with respect to a preceding group of coefficients.

According to some of the above embodiments the analyzer of the decoder may be configured to determine a position of a first group of coefficients of each subband in the data stream prior to determining the data on the GCLI values of the Nth groups of coefficients of a first subband.

According to some of the above embodiments the respective encoding unit may be configured to signal a position of a first group of coefficients of each subband in the data stream prior to encoding the data on the GCLI values of the Nth groups of coefficients of a first subband.

The preceding three embodiments related to the encoder and the decoder may be advantageously used when performing zero run coding on horizontally predicted coefficient groups. In this case, the coefficients where a zero run can start are known beforehand, but they may depend on other coefficient groups which are not run heads. Therefore, it may not be feasible to place the run heads first in the data stream, since it may not be possible to recover them correctly. Thus, the run heads may be distributed within the data on the coefficient groups. This may lead to the issue that the start of a subband, i.e. the first coefficient group of the subband, may not be known before having decoded the preceding subband. The start of the subband may be relevant since this may typically be coded in raw. Since this may interfere with the idea of massive parallel processing, the previous three embodiments may provide a solution to this issue.

According to some of the above embodiments the analyzer of the decoder may be configured to apply at least two different quantization thresholds to the sequence of groups of coefficients so as to determine runs of groups of coefficients starting from any of an Nth group of coefficients for both of the two different quantization thresholds. Additionally, the encoding unit may be configured to estimate a bit budget of the output data stream for the different quantization thresholds and to encode the data on the coefficients of the respective quantization threshold using a bit budget smaller than a maximum available bit budget.

This may be advantageous in order to determine the bit budget throughout the whole data stream, which is important for vertical prediction. Using vertical prediction, prediction may be performed e.g. between precincts of a subband. Thus, when coding data on the GCLI values of a current precinct, information whether the respective data on the GCLI values of a preceding precinct reveals zero runs may be advantageous to determine an overall bit budget. This is advantageously possible if different quantization thresholds are tested and the resulting bit budget is stored so as to determine the optimal quantization threshold to use the maximum bit budget that is available.

According to some of the above embodiments a method may be provided for decoding image data from a data stream comprising data on coefficients obtained from a frequency transform of the image data and data on Greatest Coded Line Index (GCLI) values, each related to a group of coefficients of a sequence of groups of coefficients. Said method may comprise the steps of decoding the data on the GCLI values with decoding the data on the GCLI values for each Nth group of coefficients of the sequence of groups of coefficients prior to remaining groups of coefficients of the sequence of coefficients, wherein N is greater or equal than 2; analyzing the data on the GCLI values for each Nth group of coefficients so as to determine runs of groups of coefficients starting with any of the Nth group of coefficients; decoding the data on the coefficients being part of a run of groups of coefficients using an escape decoding mechanism and decoding the data on the remaining coefficients from the data stream to obtain the image data.

According to some of the above embodiments a method may be provided for encoding image data into a data stream, the image data being decomposed into a plurality of different subbands, each subband comprising a plurality of coefficients, wherein the plurality of coefficients are arranged into a sequence of groups of coefficients. Said method may comprise the steps of: analyzing the sequence of groups of coefficients so as to determine runs of groups of coefficients starting from any of an Nth group of coefficients, wherein N is greater or equal than 2, and to determine, for the sequence of groups of coefficients, data on Greatest Coded Line Index (GCLI) values based on the determined runs of groups of coefficients; and encoding the data on the Greatest Coded Line Index values and data on the coefficient groups of a run of coefficient groups using an escape encoding mechanism and to encode the remaining data on the Greatest Coded Line Index values and the remaining data on the coefficient groups into the data stream.

## Definitions and Abbreviations

The following definitions and abbreviations are used within this document:

| | |
|---|---|
| GCLI: | Greatest Coded Line Index |
| GCLI Coefficient Group: | Group of wavelet coefficient represented by one GCLI value |
| Escape GCLI: | GCLI value not used for ordinary coding that can be used to signal a specific condition to the decoder |
| Significant GCLI: | A GCLI whose value is larger than zero |
| Insignificant GCLI: | A GCLI whose value is zero |
| GTLI: | Greatest truncated line index |
| Insignificant Truncated GCLI | A GCLI whose value is below the GTLI for a coefficient group |
| Precinct | Group of coefficients of different subbands contributing to a given spatial region in the input image. |
| Scenario | Quantization parameter defined on a precinct base that can be used to derive the GTLI values for the different wavelet subbands. |

References

[1] AMBROISE RENAUD; BUYSSCHAERT CHARLES ; PELLEGRIN PASCAL ; ROUVROY GAEL, "Method and Device for display stream compression", EP2773122 A1

[2] AMBROISE RENAUD ; BUYSSCHAERT CHARLES ; PELLEGRIN PASCAL ; ROUVROY GAEL, "Method and Device for Display Stream Compression", US9332258 BB

[3] Jean-Baptiste Lorent, "TICO Lightweight Codec Used in IP Networked or in SDI Infrastructure", SMPTE RDD 35:2016

[4] Toshiaki Kojima, "LLVC - Low Latency Video Codec for Network Transfer", SMPTE RDD 34:2015

[5] J. Kim and C. M. Kyung, "A Lossless Embedded Compression Using Significant Bit Truncation for HD Video Coding", IEEE Transactions on Circuits and Systems for Video Technology, 2010

[6] intoPIX, "intoPIX Codec Submission for JPEG-XS CfP", Design Description v0.1, 2016

[7] EP16194250, "Intra subband run-coding for low complexity image and video coding"

## Claims

**1.** A decoder (2) for decoding image data (4) from a data stream (6) comprising data (8) on coefficients (50, 51, 52, 53) obtained from a frequency transform of the image data (4) and comprising Greatest Coded Line Index (GCLI) values (10), each related to a coefficient group (54, 58) within a sequence of coefficient groups (54, 58), the decoder (2) comprising:

a decoding unit (12) for decoding the GCLI values (10) of the sequence of coefficient groups (54, 58);
an analyzer (14) for analyzing the GCLI value (10) of each $N^{th}$ coefficient group so as to determine a run (101, 102, 103) of coefficient groups (54, 58), wherein a run (101, 102, 103) starts at any one of the $N^{th}$ coefficient groups, wherein N is greater or equal than 2;
and wherein the decoding unit (12) is further configured to decode the data (8) on the coefficients (50, 51, 52, 53) being part of a run (101, 102, 103) by using an escape decoding mechanism and to decode the data (8) on coefficients (50, 51, 52, 53) not being part of a run (101, 102, 103) by using the GCLI values (10) in order to obtain the image data (4).

**2.** The decoder (2) according to claim 1, wherein the decoding unit (12) is configured to allocate zero values to coefficients (50, 51, 52, 53) of those coefficient groups (54, 58) being part of a run (101, 102, 103) so as to perform the escape decoding mechanism.

**3.** The decoder (2) according to any one of claims 1 or 2,

wherein the GCLI values (10) indicate a number of bit planes to be transmitted for the coefficients of the coefficient groups (54, 58),
wherein the decoder (2) is configured to use an escape GCLI code of an $N^{th}$ coefficient group as an indication for performing the escape decoding mechanism and to determine the start of a run (101, 102, 103), wherein said escape GCLI code is represented by a GCLI value (10) outside a predetermined GCLI value range,
and wherein the decoder (2) is configured to perform the escape decoding mechanism by skipping the decoding of the GCLI values (10) of those coefficient groups (54, 58) which are part of the run (101, 102, 103

**4.** The decoder (2) according to any one of claims 1 to 3, wherein a run (101, 102, 103) is a sequence of coefficient groups (54, 58) of a predetermined run-length size, and wherein the decoder (2) is configured to appoint an $N^{th}$ coefficient group the start of a run if said $N^{th}$ coefficient group is in a position multiple of said predetermined run-length size.

**5.** The decoder (2) according to any one of claims 1 to 4, wherein the decoder (2) is configured to decode for each of the coefficient groups (54, 58) its GCLI value (10) differentially to a GCLI value (10) of a preceding coefficient group and to appoint an $N^{th}$ coefficient group the start of a run (101, 102, 103) if the GCLI value (10) of the $N^{th}$ coefficient group represents an escape GCLI code and to use the GCLI value (10) of the $N^{th}$ coefficient group for differentially decoding the GCLI values (10) of any subsequent coefficient group (54, 58).

**6.** The decoder (2) according to any one of claims 1 to 5, wherein the decoder (2) is configured to decode for each of the $N^{th}$ coefficient groups its GCLI value (10) differentially to a GCLI value (10) of a preceding $N^{th}$ coefficient group and to appoint the $N^{th}$ coefficient group a consecutive start of a run (101, 102, 103) if the GCLI value (10) of the $N^{th}$ coefficient group represents an escape GCLI code and to use zero instead of the escape GCLI code for differentially decoding the GCLI values (10) of any subsequent coefficient group (54, 58).

**7.** The decoder (2) according to any of claims 1 to 5, wherein the decoder (2) is configured to decode for each of the $N^{th}$ coefficient groups its GCLI value differentially to a GCLI value of a preceding $N^{th}$ coefficient group and to appoint the $N^{th}$ coefficient group a consecutive start of a run (101, 102, 103) if the GCLI value of the $N^{th}$ coefficient group represents an escape GCLI code and to use said escape GCLI code for differentially decoding the GCLI values of any subsequent coefficient group (54, 58).

**8.** The decoder (2) of one of claims 5 to 7, wherein at least one of the coefficient groups (54, 58) is located in a first line of a subband of the frequency transform of the image data (4) and wherein the decoder (2) is configured to perform a vertical differential decoding wherein the preceding coefficient group is located in a second line of the subband above or below the first line, or to perform a horizontal differential decoding wherein the at least one of the coefficient groups is located in the same line of the subband than the preceding coefficient group.

**9.** The decoder (2) of one of claims 5 to 7, wherein at least one of the coefficient groups (54, 58) is located in a first line of a subband of the frequency transform of the image data (4) and wherein the decoder (2) is configured to perform a vertical differential decoding wherein the preceding coefficient group is located in a second line of the subband above or below the first line, or to perform a horizontal differential decoding wherein the at least one of the coefficient groups is located in the first line of the subband and the preceding coefficient group is located in a first line of a different subband.

**10.** Encoder (20) for encoding image data (4) into a data stream (6), the image data (4) being decomposed into a plurality of different subbands, each subband comprising a plurality of coefficients (50, 51, 52, 53), wherein the plurality of coefficients (50, 51, 52, 53) are arranged in a sequence of coefficient groups (54, 58), the encoder (20) comprising:

an analyzer (14) configured to analyze the sequence of coefficient groups (54, 58) so as to determine a run (101, 102, 103) of coefficient groups (54, 58), wherein a run (101, 102, 103) starts at any of an $N^{th}$ coefficient group, wherein N is greater or equal than 2, and to assign a Greatest Coded Line Index (GCLI) value (10) for each coefficient group (54, 58);
an encoding unit (12) for encoding the GCLI values (10), wherein the encoding unit (12) is further configured to encode data (8) on those coefficients (50, 51, 52, 53) being part of a run (101, 102, 103) by using an escape encoding mechanism and to encode data (8) on those coefficients (50, 51, 52, 53) not being part of a run (101, 102, 103) by using the GCLI values (10) in order to encode the image data (4).

**11.** The encoder (20) of claim 10, wherein the encoding unit (12) is configured to allocate zero values to coefficients (50, 51, 52, 53) of those coefficient groups (54, 58) being part of a run (101, 102, 103) so as to perform the escape encoding mechanism.

**12.** The encoder (2) according to any one of claims 10 or 11,

wherein the GCLI values (10) indicate a number of bit planes to be transmitted for the coefficients (50, 51, 52, 53) of the coefficient groups (54, 58),
wherein the encoder (20) is configured to use an escape GCLI code of an $N^{th}$ coefficient group as an indication for performing the escape encoding mechanism and to determine the start of a run (101, 102, 103), wherein said escape GCLI code is represented by a GCLI value (10) outside a predetermined GCLI value range,
and wherein the encoder (20) is configured to perform the escape encoding mechanism by skipping the encoding of the GCLI values (10) of those coefficient groups (54, 58) which are part of the run.

**13.** The encoder (20) according to any one of claims 10 to 12, wherein a run (101, 102, 103) is a sequence of coefficient groups (54, 58) of a predetermined run-length size, and wherein the encoder (20) is configured to appoint an $N^{th}$ coefficient group the start of a run if said $N^{th}$ coefficient group is in a position multiple of said predetermined run-length size.

**14.** The encoder (20) according to any one of claims 10 to 13, wherein the encoder (20) is configured to encode for each of the coefficient groups (54, 58) its GCLI value (10) differentially to a GCLI value (10) of a preceding coefficient group and to appoint an $N^{th}$ coefficient group the start of a run if the GCLI values (10) of consecutive coefficient groups of a predetermined run-length directly following the $N^{th}$ coefficient group are equal to or less than zero.

**15.** The encoder (20) of claim 14, wherein, if the encoder (20) determines a run, the encoder (20) is configured to replace the GCLI value (10) of the $N^{th}$ coefficient group being the start of said run by an escape GCLI code and to use said escape GCLI code for differentially encoding the GCLI values (10) of any subsequent coefficient group (54, 58).

**16.** The encoder (20) according to any of claims 10 to 15, wherein the encoder (20) is configured to appoint a second $N^{th}$ coefficient group a start of a consecutive second run if the GCLI values (10) of consecutive coefficient groups (54, 58) of a predetermined run-length directly following the second $N^{th}$ coefficient group are equal to or less than zero, and to encode for the second $N^{th}$ coefficient group its GCLI value (10) differentially to the GCLI value (10) of a preceding first $N^{th}$ coefficient group (54, 58).

**17.** The encoder (20) of claim 16, wherein, if the encoder (20) determines a consecutive second run, the encoder (20) is configured to signal a zero as the GCLI value (10) of the second $N^{th}$ coefficient group which is the start of said consecutive second run.

**18.** The encoder (20) of one of claims 10 to 17, wherein at least one of the coefficient groups is located in a first line of a subband and wherein the encoder (20) is configured to perform a vertical differential encoding wherein the preceding coefficient group is located in a second line of the subband above or below the first line, or to perform a horizontal differential encoding wherein the at least one of the coefficient groups is located in the same line of the subband than the preceding coefficient group.

**19.** The encoder (20) of one of claims 10 to 17, wherein at least one of the coefficient groups is located in a first line of a first subband and wherein the encoder (20) is configured to perform a vertical differential encoding wherein the preceding coefficient group is located in a second line of the first subband above or below the first line, or to perform a horizontal differential encoding wherein the at least one of the coefficient groups is located in the first line of the first subband and the preceding coefficient group is located in a first line of a second subband.

**20.** A data stream (22) for coded image data (4), the data stream (22) comprising data (8) on coefficients (50, 51, 52, 53) obtained from a frequency transform of the image data (4) and comprising Greatest Coded Line Index (GCLI) values (10), each related to a coefficient group (54, 58) within a sequence of coefficient groups, wherein the GCLI value (10) of an $N^{th}$ coefficient group (10a), said $N^{th}$ coefficient group (10a) indicating a start of a run (101, 102, 103) of coefficient groups (54, 58), is arranged before the GCLI values (10b) of other coefficient groups (54, 58) being part of the run (101, 102, 103), and wherein both the GCLI value (10) of the $N^{th}$ coefficient group and the GCLI values (10) of the other coefficient groups (54, 58) are arranged before the data (8) on the coefficients (50, 51, 52, 53).

**21.** The data stream (22) of claim 20, wherein the image data (4) is decomposed into a plurality of different subbands comprising the coefficient groups (54, 58), and wherein the data stream (22) comprises at least one header that points to a starting position of at least one of the plurality of different subbands.

**22.** The data stream (22) of claim 20, wherein the image data (4) is decomposed into a plurality of different subbands comprising the coefficient groups (54, 58), and wherein boundaries between subbands are removed in the data stream (22).

**23.** Method for decoding image data (4) from a data stream (6) comprising data (8) on coefficients (50, 51, 52, 53) obtained from a frequency transform of the image data (4) and Greatest Coded Line Index (GCLI) values (10), each related to a coefficient group (54, 58) within a sequence of coefficient groups, the method comprising:

decoding the GCLI values (10) of the sequence of coefficient groups (54, 58);
analyzing the GCLI value (10) of each $N^{th}$ coefficient group so as to determine a run (101, 102, 103) of coefficient groups (54, 58), wherein a run (101, 102, 103) starts at any one of the $N^{th}$ coefficient group, wherein N is greater or equal to 2; and
decoding the data (8) on those coefficients (50, 51, 52, 53) being part of a run (101, 102, 103) by using an escape decoding mechanism and decoding the data (8) on those coefficients (50, 51, 52, 53) not being part of a run (101, 102, 103) by using the GCLI values (10) in order to obtain the image data (4).

**24.** Method for encoding image data (4) into a data stream (6), the image data (4) being decomposed into a plurality of different subbands, each subband comprising a plurality of coefficients (50, 51, 52, 53), wherein the plurality of coefficients (50, 51, 52, 53) are arranged in a sequence of coefficient groups (54, 58), the method comprising:

analyzing the sequence of coefficient groups (54, 58) so as to determine a run (101, 102, 103) of coefficient groups (54, 58), wherein a run (101, 102, 103) starts at any of an $N^{th}$ coefficient group, wherein N is greater or equal than 2, and assigning a Greatest Coded Line Index (GCLI) value (10) to each coefficient group (54, 58);
encoding the GCLI values (10) and encoding data (8) on those coefficients (50, 51, 52, 53) being part of a run (101, 102, 103) by using an escape encoding mechanism and encoding data (8) on those coefficients (50, 51, 52, 53) not being part of a run (101, 102, 103) by using the GCLI values (10) in order to encode the image data (4).

**25.** A computer program for implementing the method of claim 23 or claim 24 when being executed on a computer or signal processor.

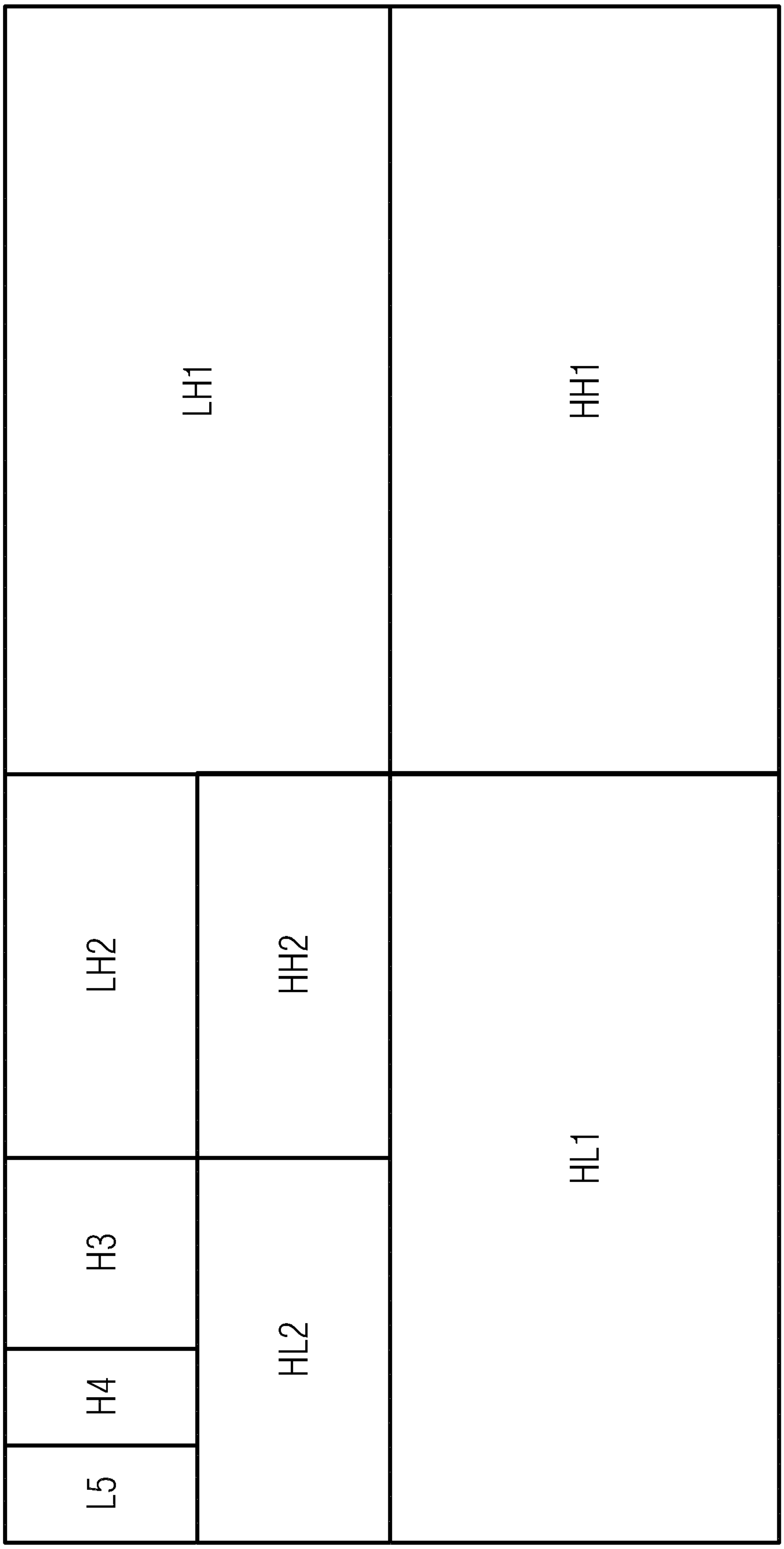


Fig. 1

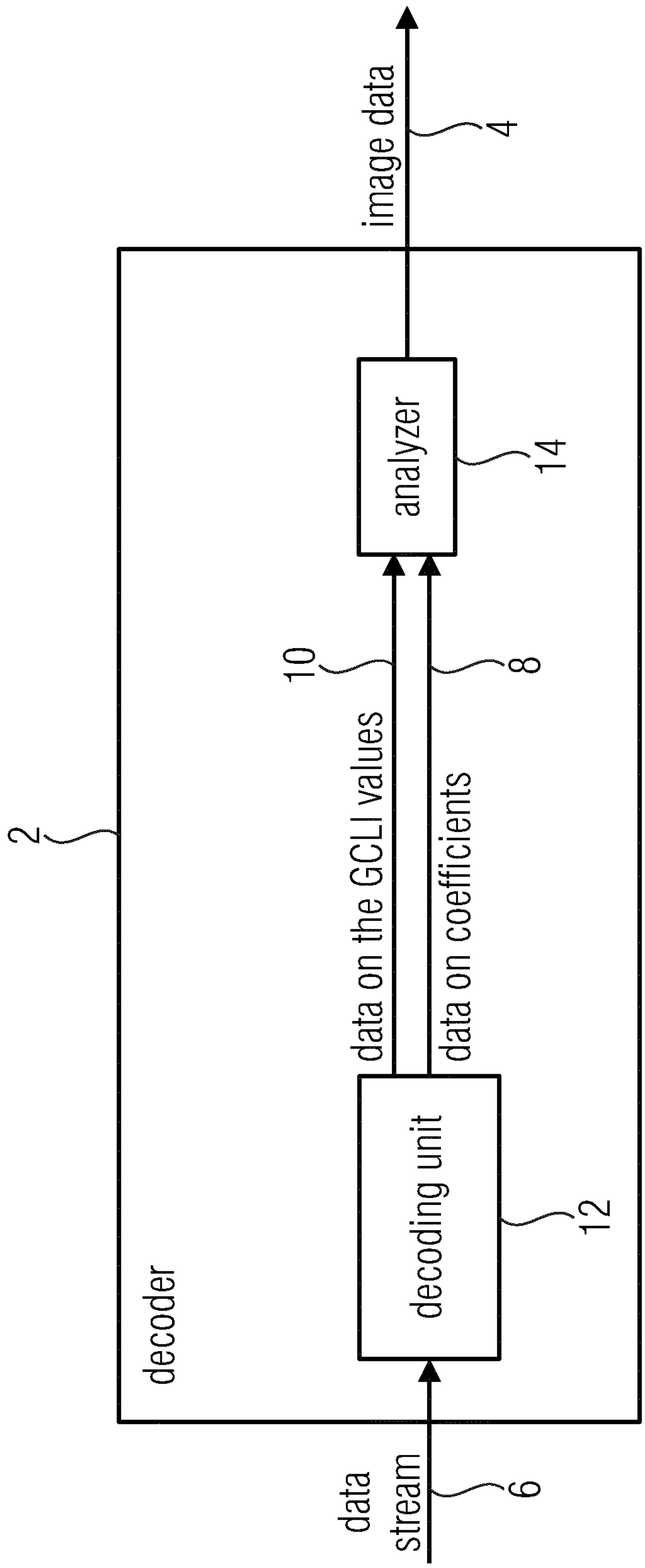
image data
4
analyzer
14
10
data on the GCLI values
8
data on coefficients
2
decoding unit
12
decoder
data stream
6

Fig. 2

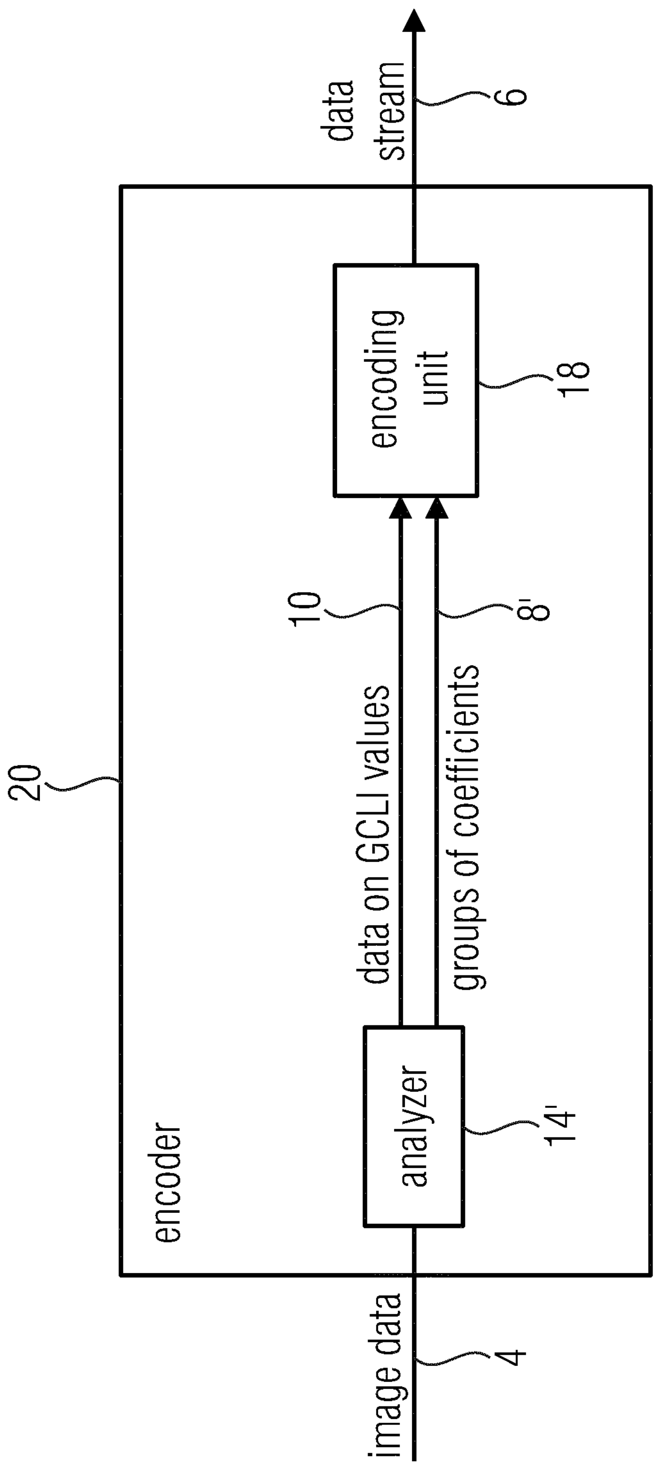
20
encoder
image data
4
analyzer
14'
data on GCLI values
10
groups of coefficients
8'
encoding
unit
18
data
stream
6

Fig. 3

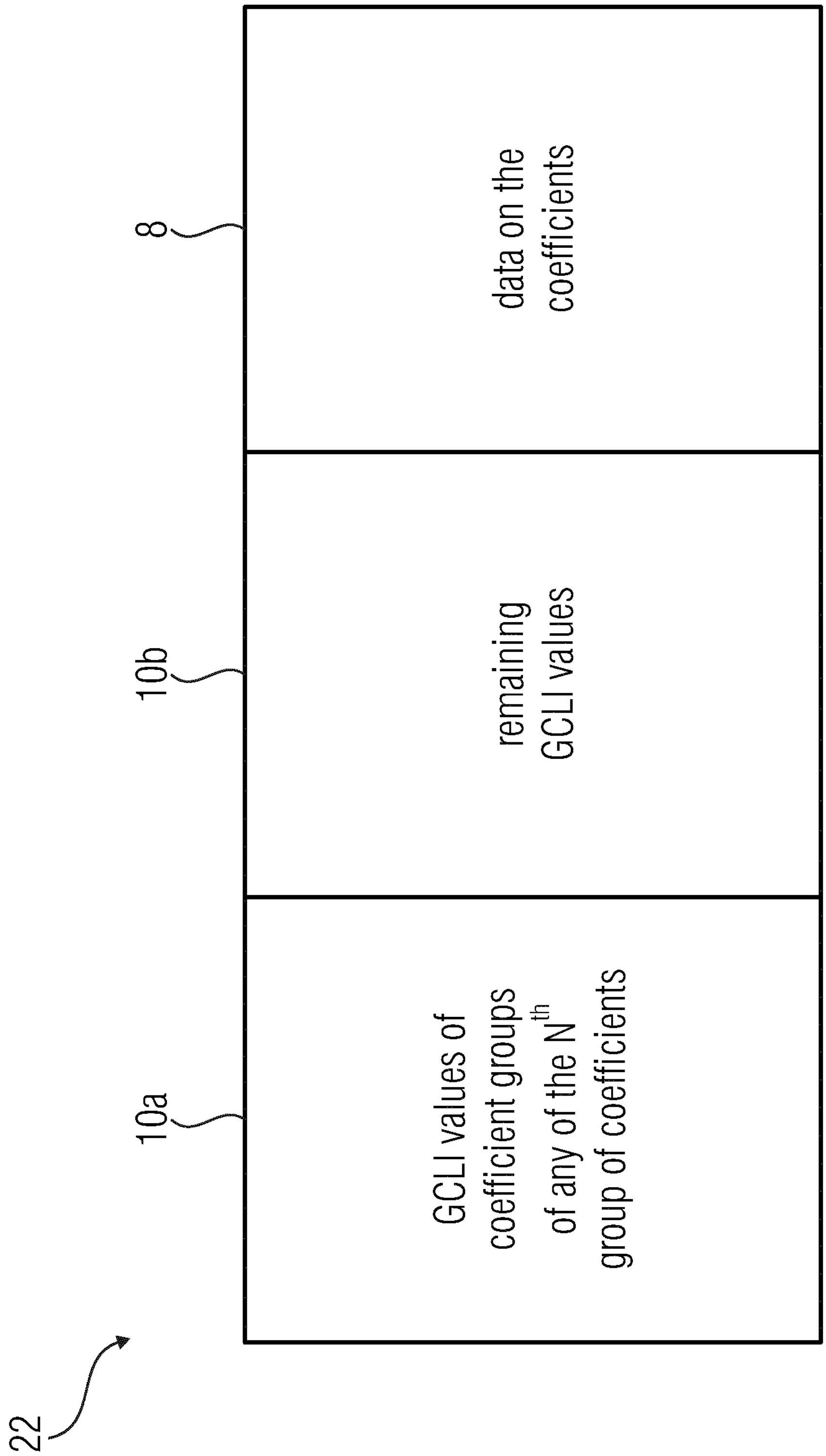
22
10a
GCLI values of
coefficient groups
of any of the Nth
group of coefficients
10b
remaining
GCLI values
8
data on the
coefficients

Fig. 4

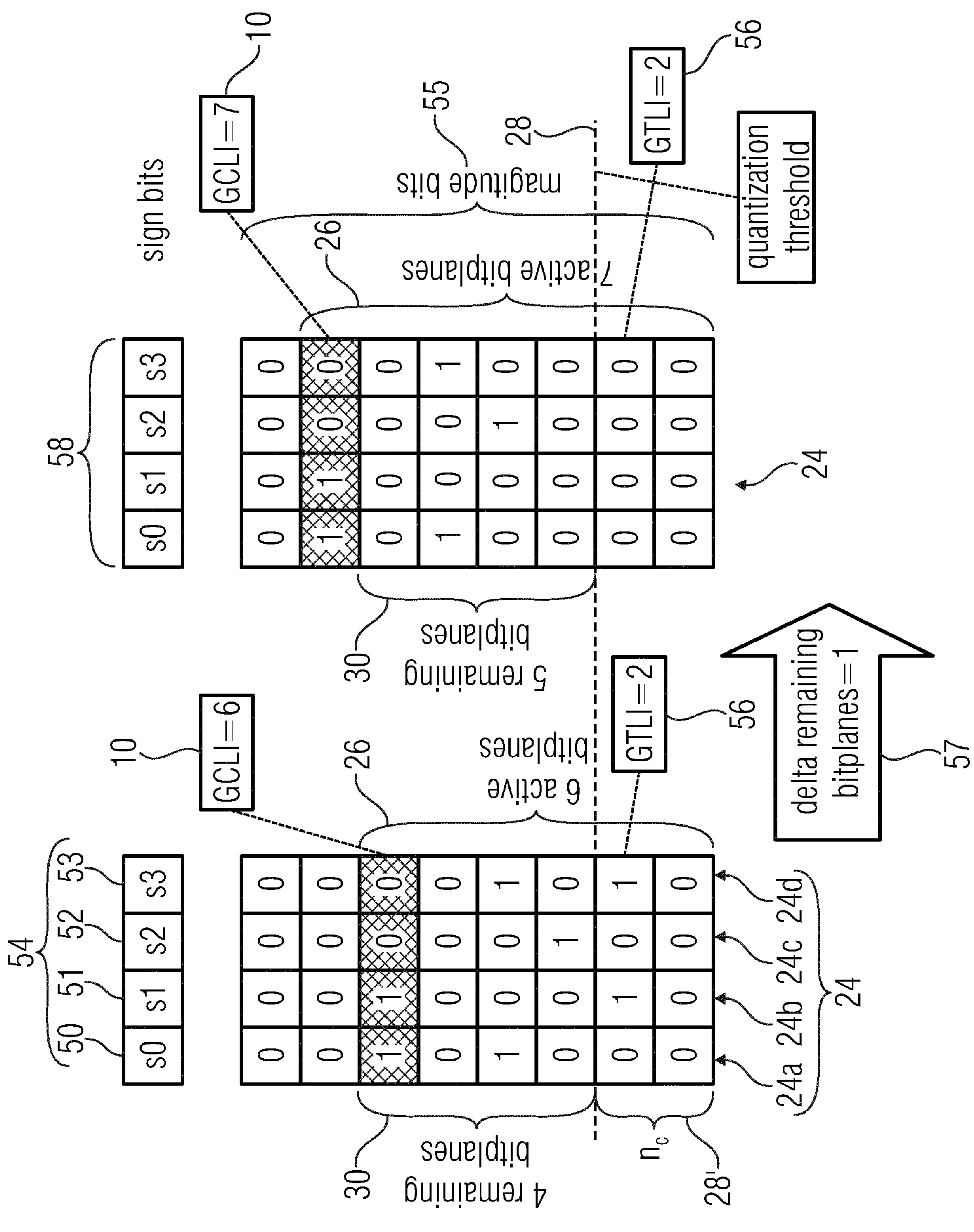
sign bits
GCLI=7
GCLI=6
GTLI=2
magnitude bits
7 active bitplanes
6 active bitplanes
5 remaining bitplanes
4 remaining bitplanes
quantization threshold
delta remaining bitplanes=1
s0
s1
s2
s3
$n_c$
10
24
24a
24b
24c
24d
26
28
28'
30
50
51
52
53
54
55
56
57
58

Fig. 5

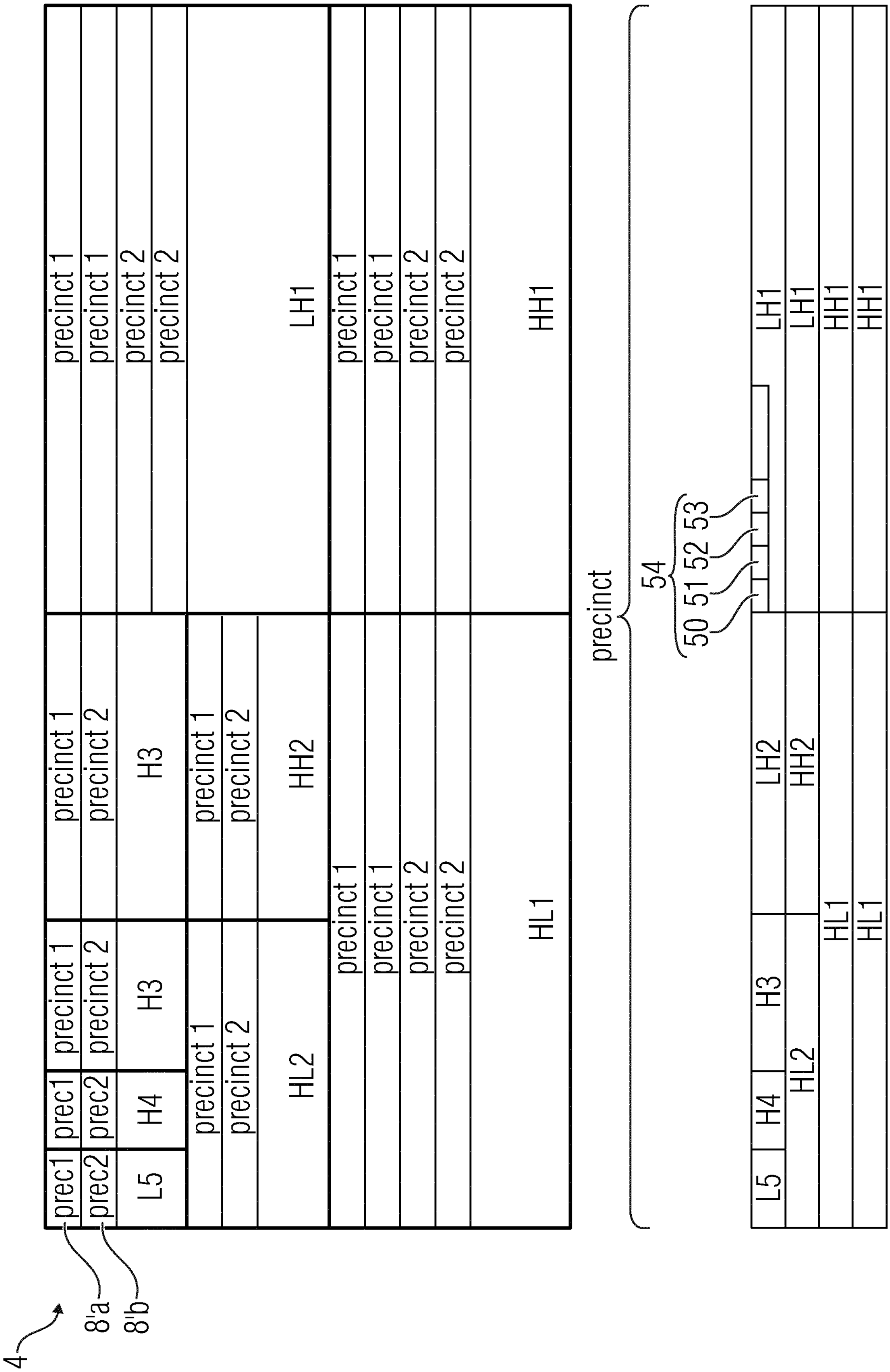
4
8'a
8'b
prec1
prec2
prec1
prec2
L5
H4
precinct 1
precinct 2
H3
precinct 1
precinct 2
HL2
HH2
precinct 1
precinct 2
HL1
LH1
HH1
precinct
54
50 51 52 53
L5
H4
H3
HL2
LH2
HH2
HL1
HL1
LH1
LH1
HH1
HH1

Fig. 6

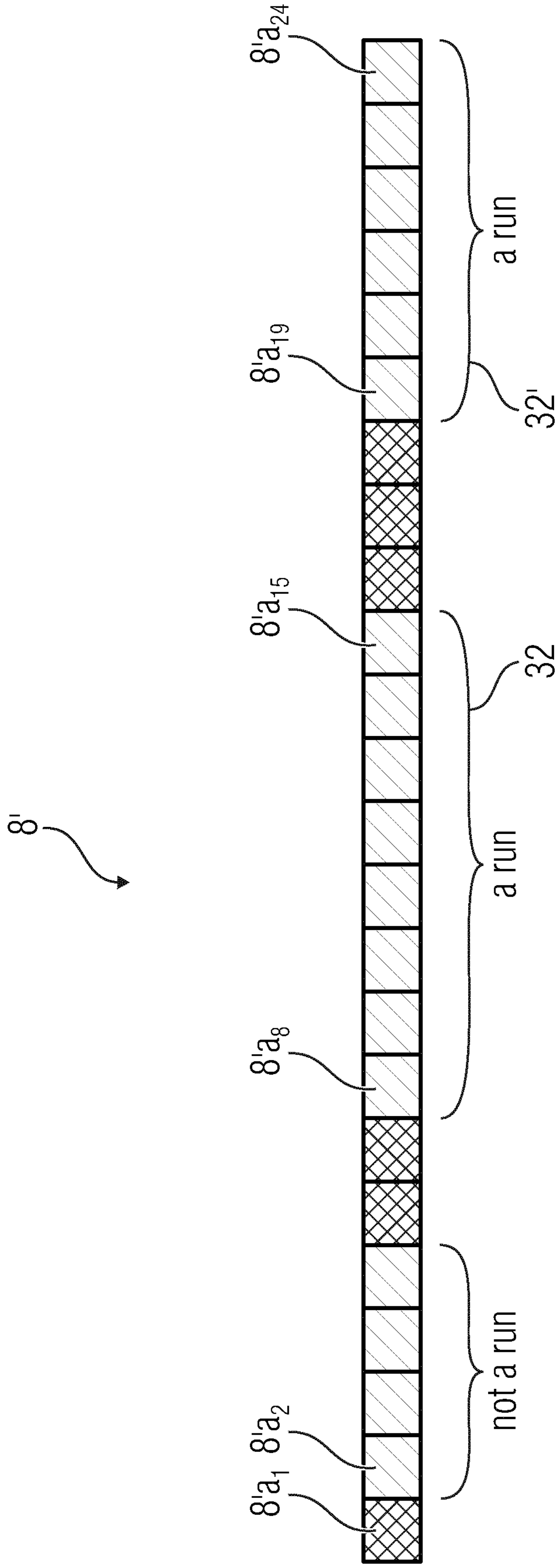


Fig. 7

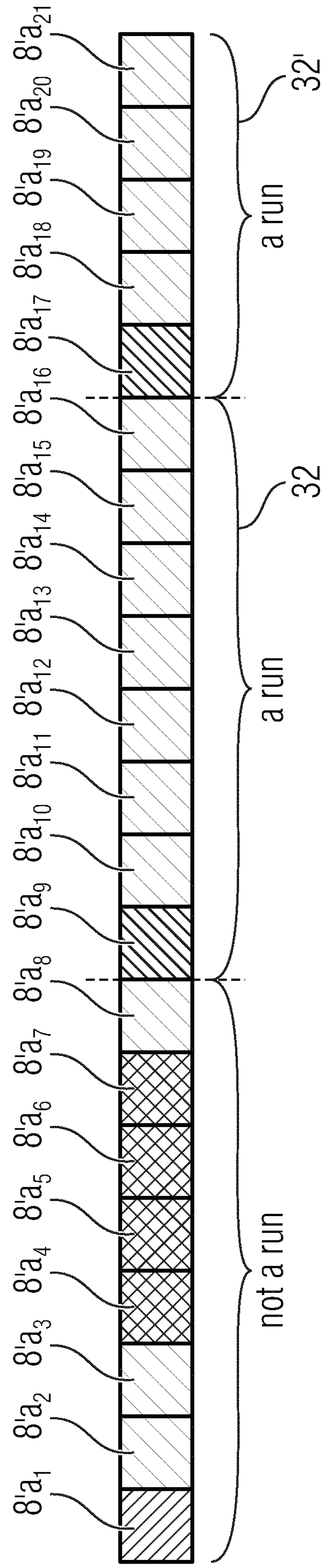
8'a1
8'a2
8'a3
8'a4
8'a5
8'a6
8'a7
8'a8
8'a9
8'a10
8'a11
8'a12
8'a13
8'a14
8'a15
8'a16
8'a17
8'a18
8'a19
8'a20
8'a21
not a run
a run
32
a run
32'

Fig. 8

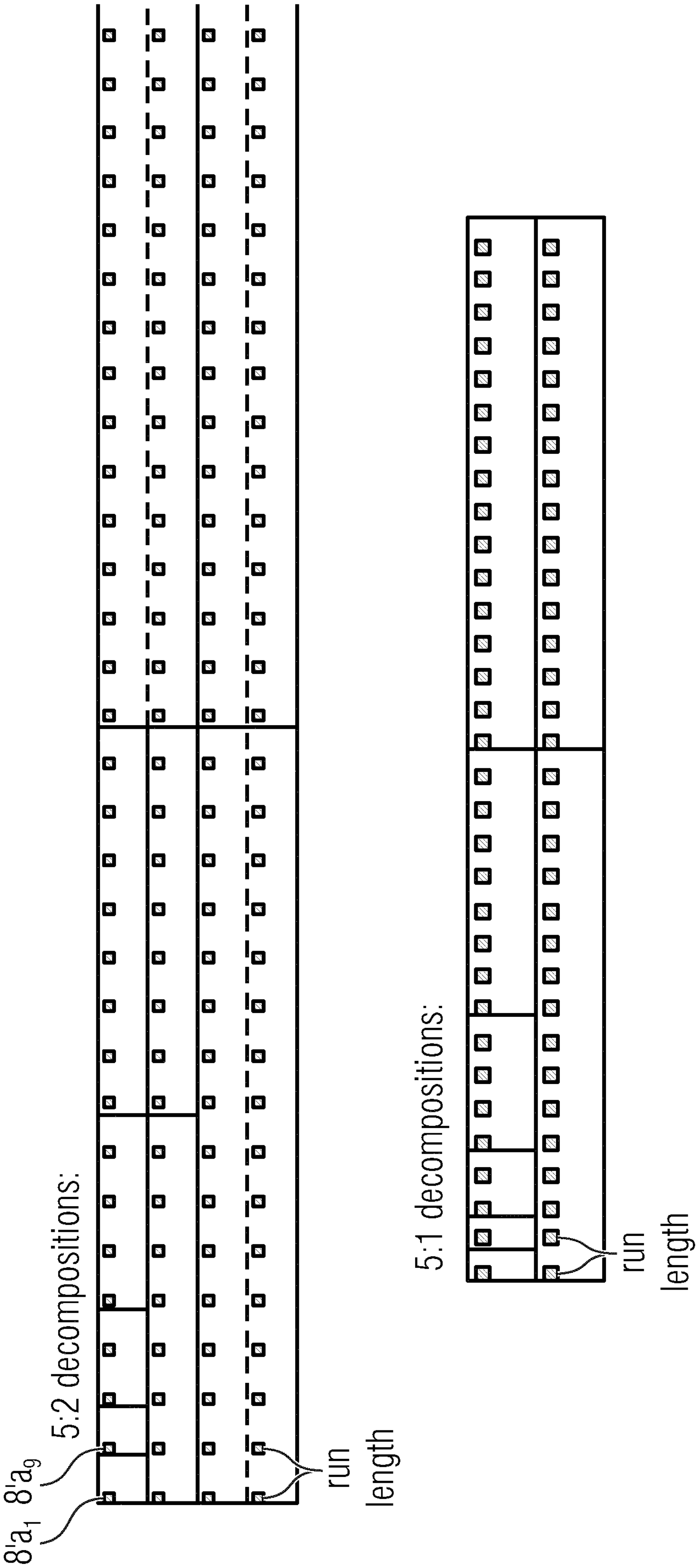
5:2 decompositions:
$8'a_1$
$8'a_9$
run length
5:1 decompositions:
run length

Fig. 9

| | 101 | | | | 102 | | | | 103 | | | | | | | |
|---|---|---|---|---|---|---|---|---|---|---|---|---|---|---|---|---|
| position | 0 | 1 | 2 | 3 | 4 | 5 | 6 | 7 | 8 | 9 | 10 | 11 | 12 | 13 | 14 | 15 |
| truncated GCLIs | 0 | 0 | 0 | 0 | 0 | 0 | 0 | 0 | 0 | 0 | 0 | 0 | 0 | 3 | 2 | 3 |
| prediction residuals | 0 | 0 | 0 | 0 | 0 | 0 | 0 | 0 | 0 | 0 | 0 | 0 | 0 | 3 | -1 | 1 |
| after runs | -1 | - | - | - | -1 | - | - | - | -1 | - | - | - | 0 | 3 | -1 | 1 |
| after runs with prediction from escape GCLI | -1 | - | - | - | 0 | - | - | - | 0 | - | - | - | 1 | 3 | -1 | 3 |

Fig. 10

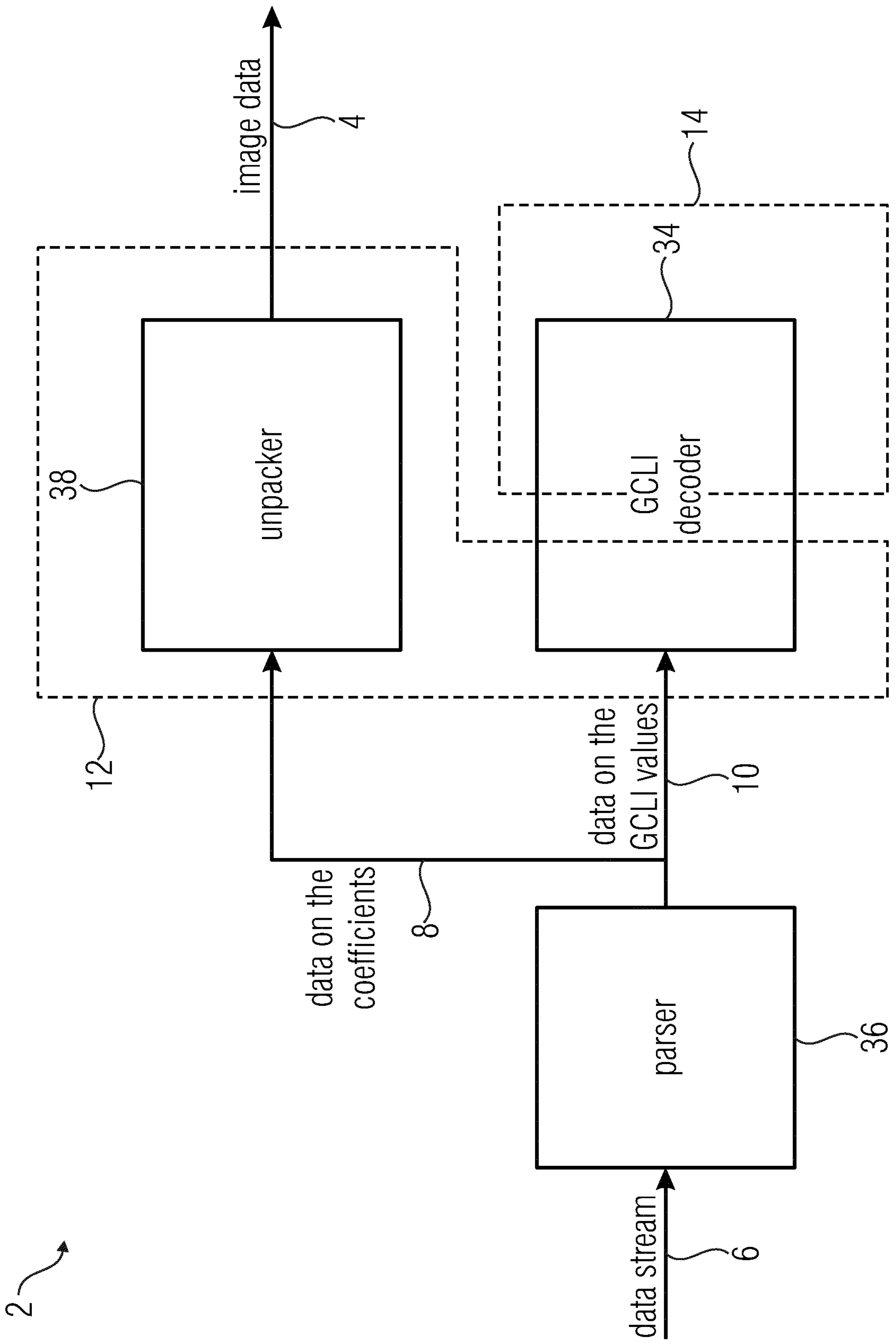

image data
4
14
34
38
unpacker
GCLI
decoder
12
data on the
GCLI values
10
data on the
coefficients
8
parser
36
data stream
6
2


Fig. 11

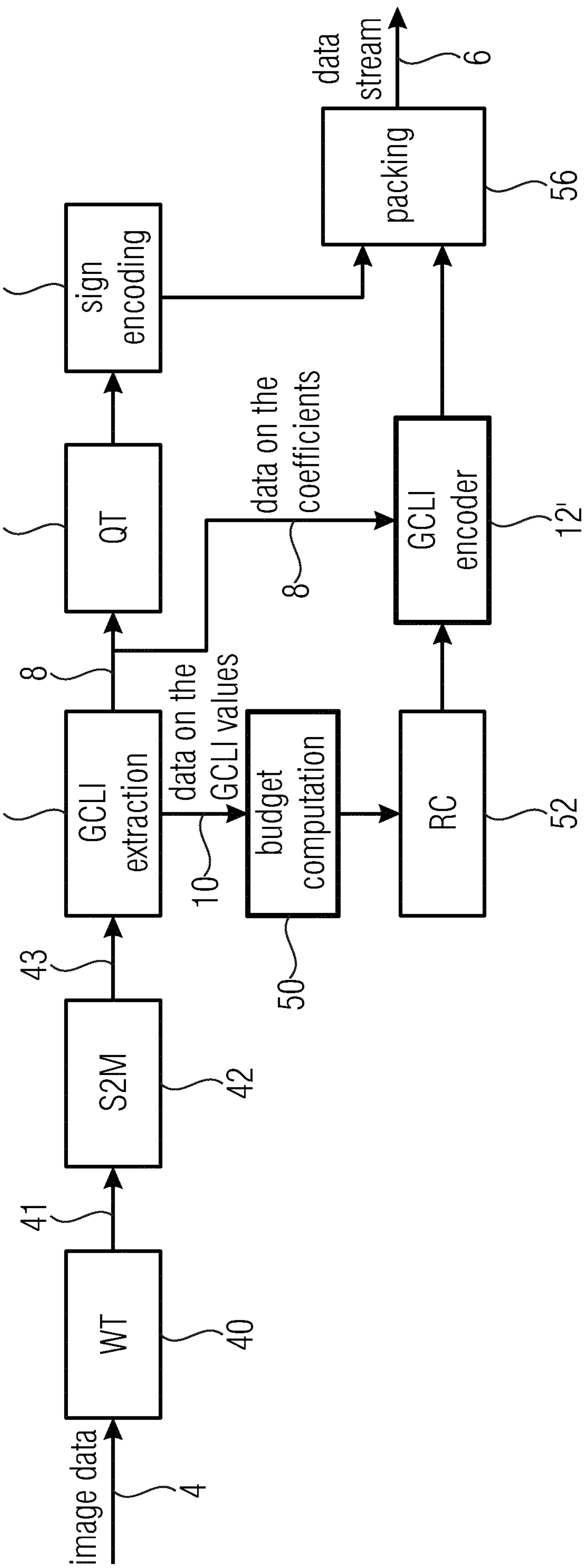
image data
4
WT
40
41
S2M
42
43
GCLI extraction
14'
8
QT
46
sign encoding
48
data on the GCLI values
10
budget computation
50
RC
52
data on the coefficients
8
GCLI encoder
12'
packing
56
data stream
6

Fig. 12

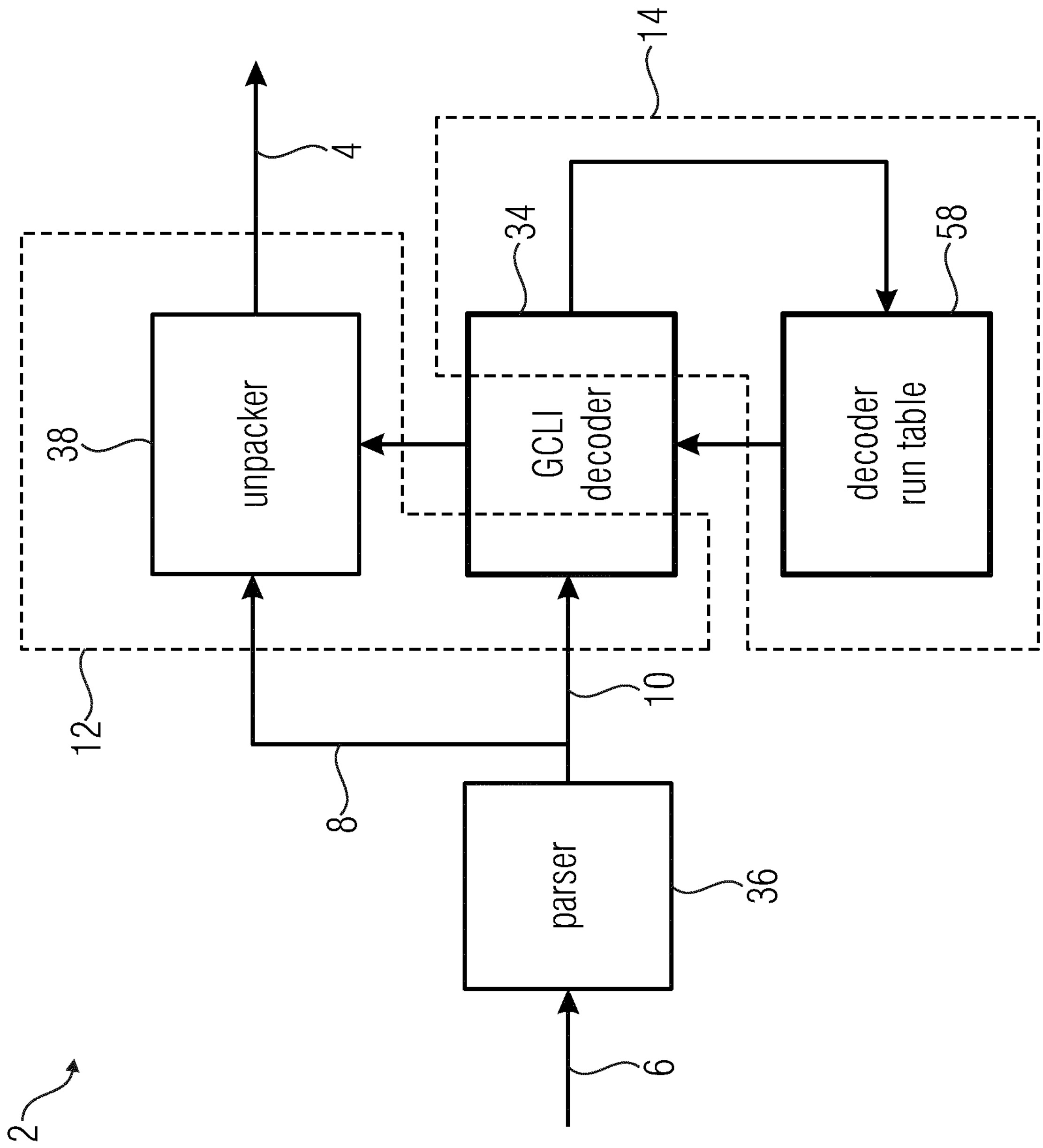
unpacker
GCLI
decoder
decoder
run table
parser
2
4
6
8
10
12
14
34
36
38
58

Fig. 13

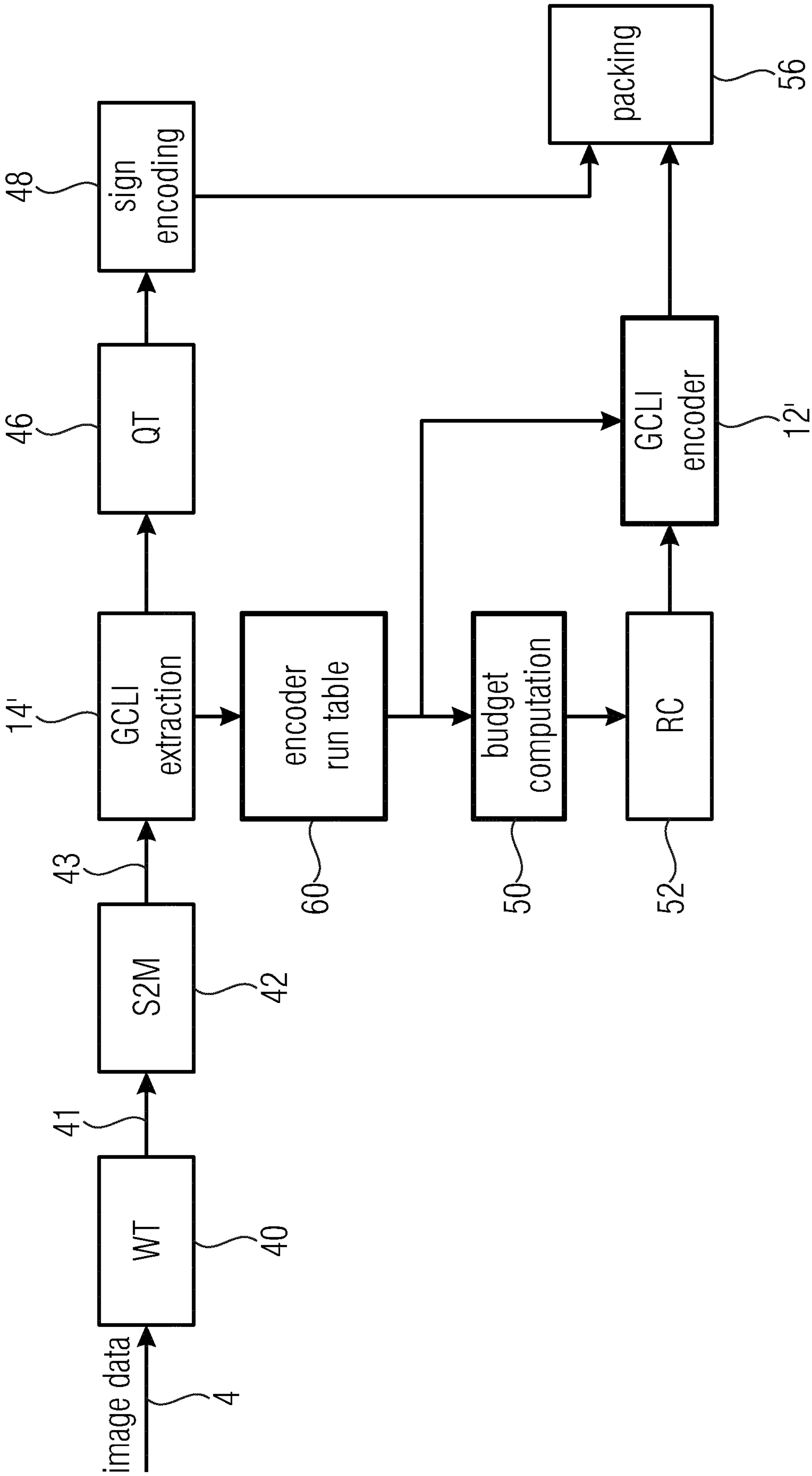
image data
4
WT
40
41
S2M
42
43
GCLI extraction
14'
QT
46
sign encoding
48
encoder run table
60
budget computation
50
RC
52
GCLI encoder
12'
packing
56

Fig. 14

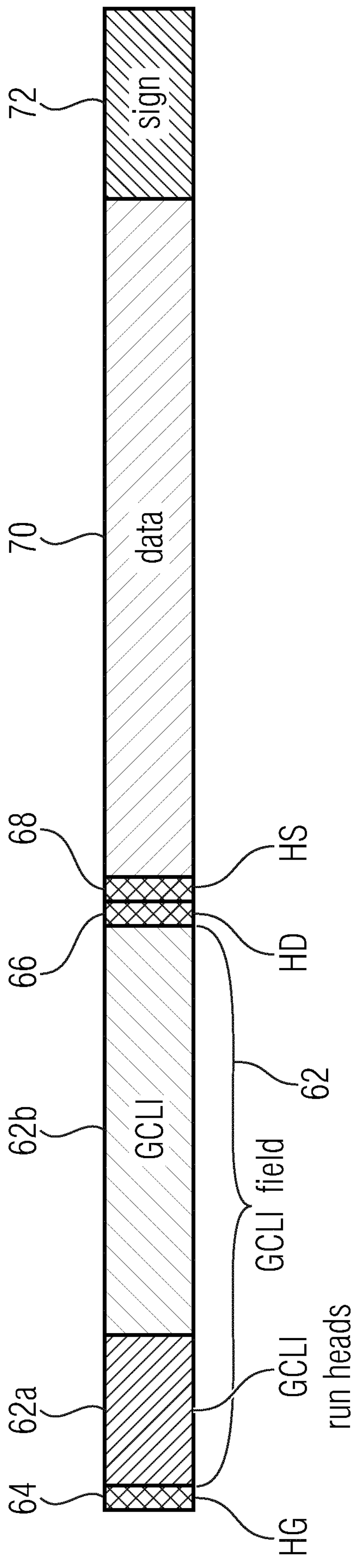
72
sign
70
data
68
HS
66
HD
62
62b
GCLI
GCLI field
62a
GCLI
run heads
64
HG

Fig. 15

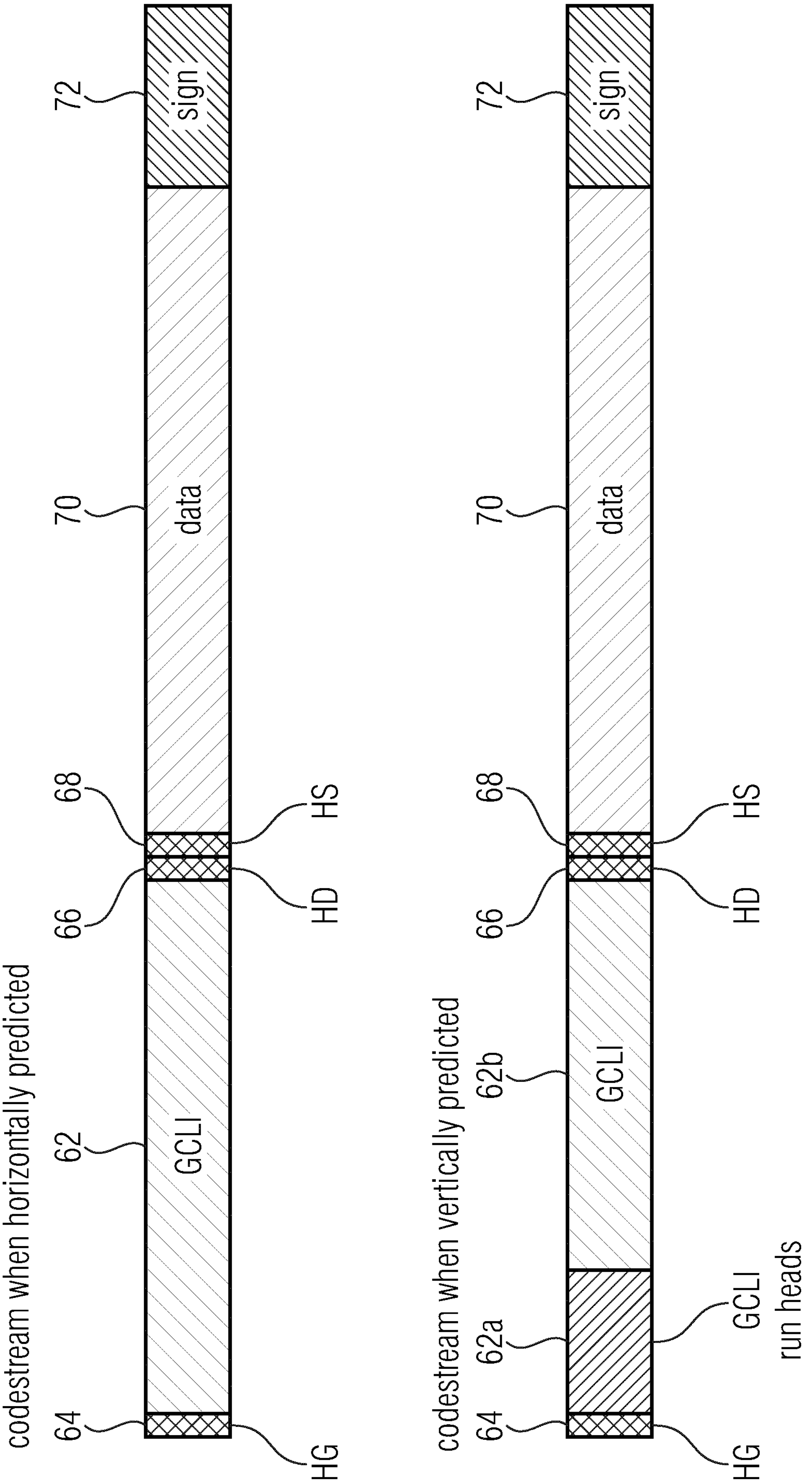
codestream when horizontally predicted
64
62
66
68
70
72
GCLI
data
sign
HG
HD
HS
codestream when vertically predicted
64
62a
62b
66
68
70
72
GCLI
data
sign
HG
GCLI
run heads
HD
HS

Fig. 16

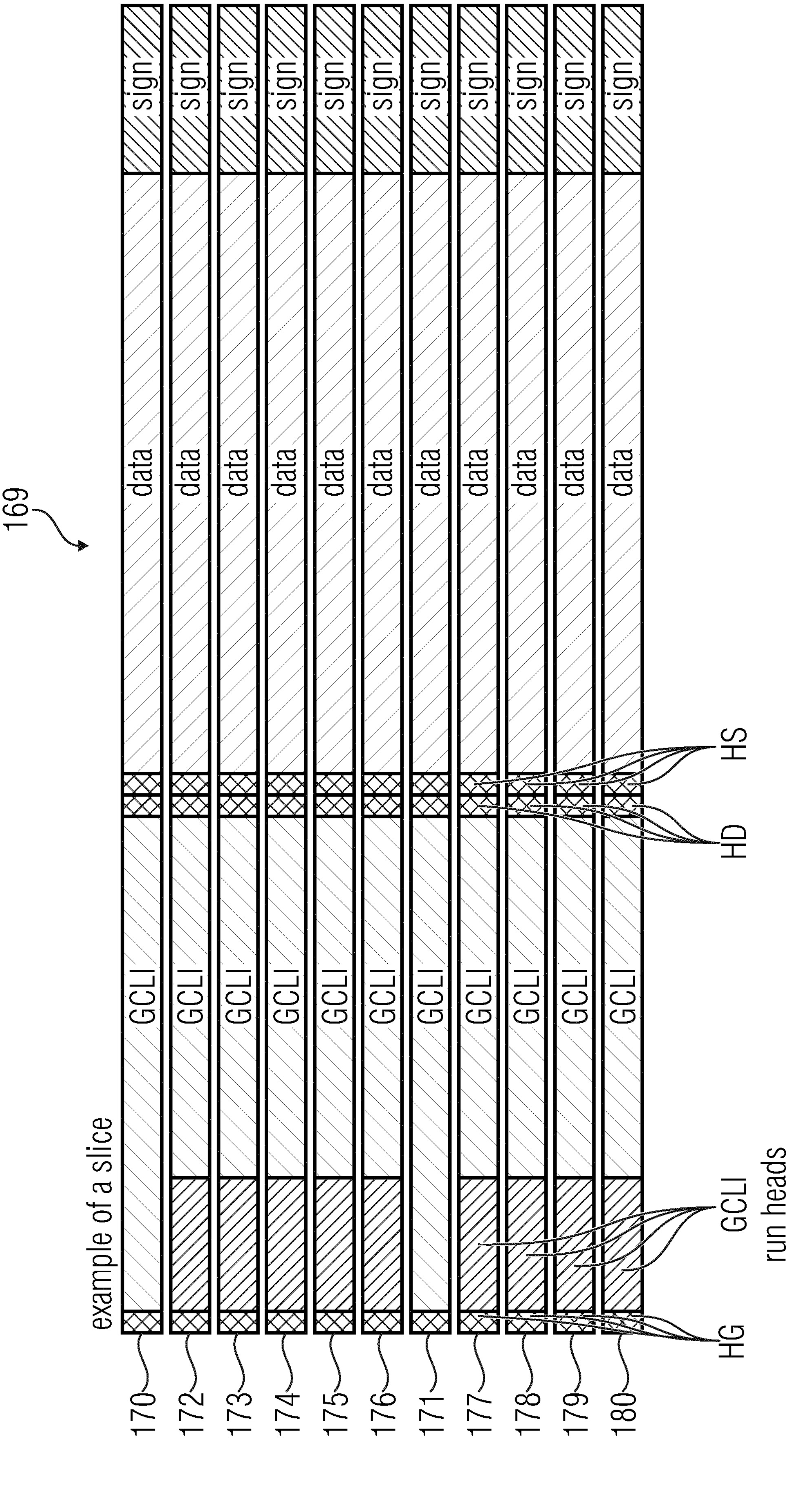
169
example of a slice
sign
data
GCLI
HS
HD
GCLI run heads
HG
170
172
173
174
175
176
171
177
178
179
180

Fig. 17

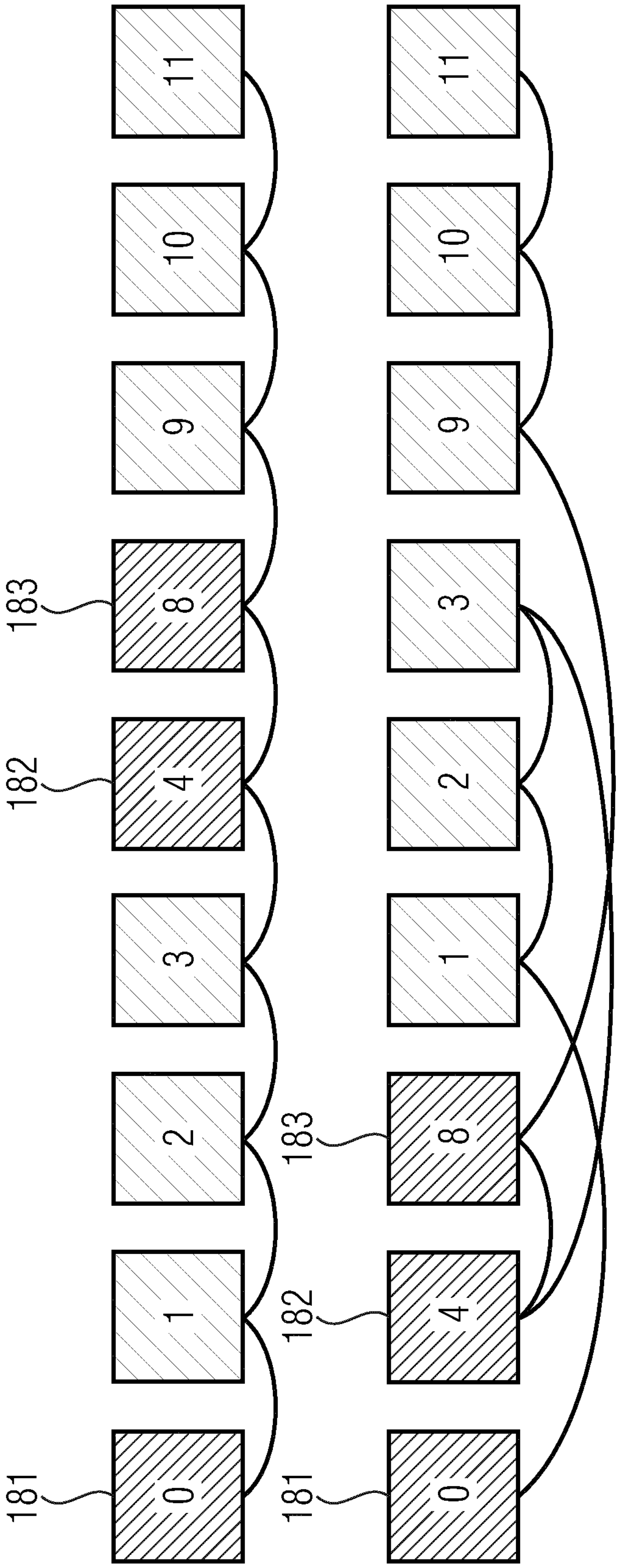


Fig. 18

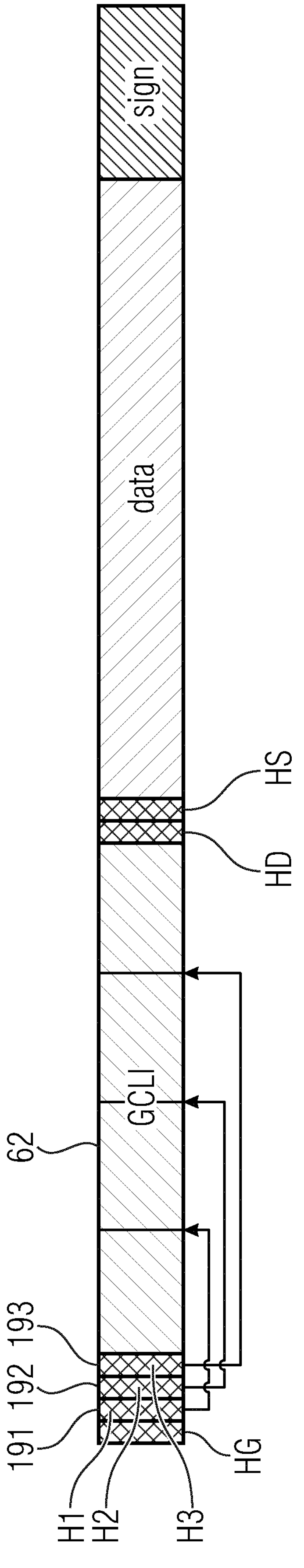


Fig. 19

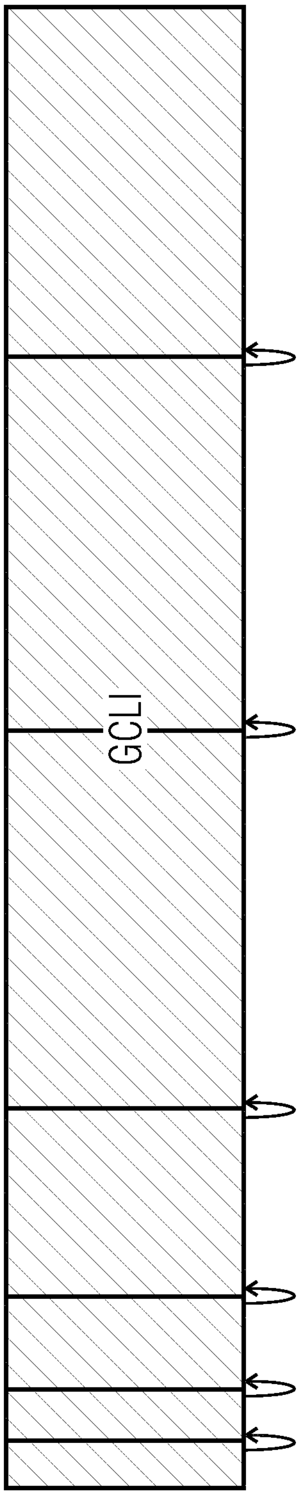


Fig. 20

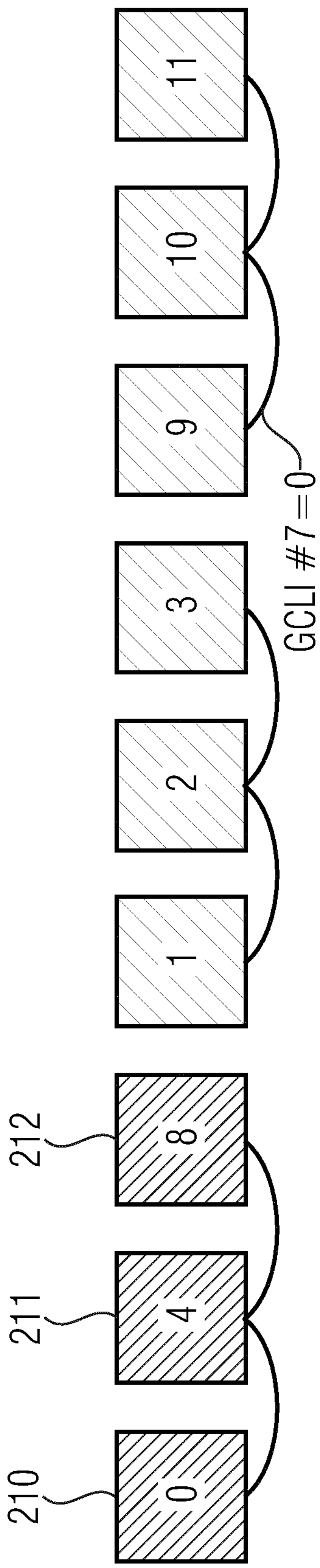


Fig. 21A

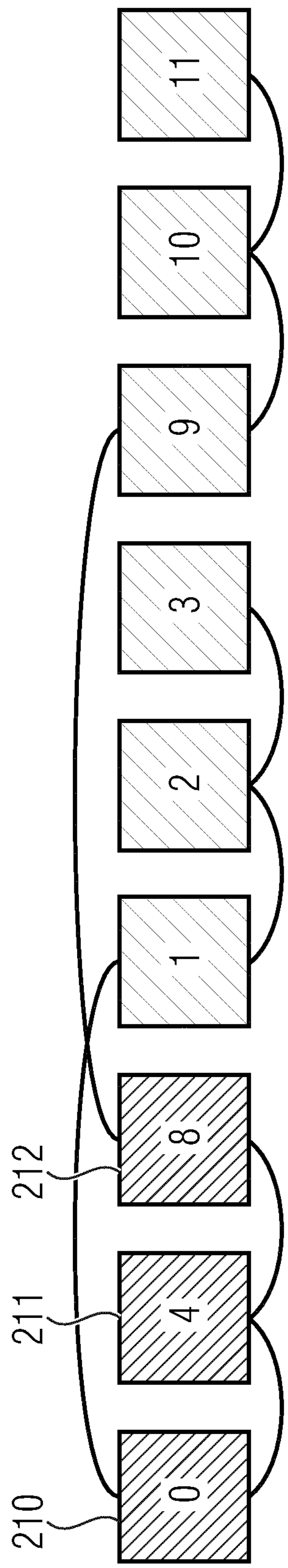


Fig. 21B

Europäisches Patentamt
European Patent Office
Office européen des brevets

# EUROPEAN SEARCH REPORT

Application Number
EP 17 18 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br><br>Y | ISO/IEC JTC1/SC29/WG1: "Updated text of ISO/IEC 21122 WD1 (JPEG XS) v1.2", 74. JPEG MEETING;15-1-2017 - 20-1-2017; GENEVA; (JOINT PICTURE EXPERT GROUP OR ISO/IEC JTC1/SC29/WG1); URL: HTTPS://WWW.ISO.ORG,, no. wg1m74001, 21 February 2017 (2017-02-21), XP030190286,<br>* Annex A *<br>* Annex C *<br>----- | 1-5, 8-14, 18-25<br><br><br><br><br><br><br><br><br>6,7, 15-17 | INV.<br>H04N19/93<br>H04N19/593<br>H04N19/463<br>H04N19/132<br>H04N19/136<br>H04N19/182 |
| X<br><br><br><br><br><br><br><br><br>Y | FRAUNHOFER IIS: "GCLI spataial zero-run coding", 74. JPEG MEETING;15-1-2017 - 20-1-2017; GENEVA; (JOINT PICTURE EXPERT GROUP OR ISO/IEC JTC1/SC29/WG1); URL: HTTPS://WWW.ISO.ORG,, no. wg1m74014, 16 January 2017 (2017-01-16), XP030190299,<br>* the whole document *<br>----- | 1-5, 10-14, 20-25<br><br><br><br><br><br><br><br><br>6,7, 15-17 | TECHNICAL FIELDS SEARCHED (IPC)<br>H04N |
| Y | ZHANG (MEDIATEK) K ET AL: "AHG7: An efficient coding method for DLT in 3D-HEVC", 5. JCT-3V MEETING; 27-7-2013 - 2-8-2013; VIENNA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-E0176-v3, 27 July 2013 (2013-07-27), XP030131209,<br>* section [2 Proposed method] *<br>----- | 6,7, 15-17 | |
| Y | WO 2014/205665 A1 (MEDIATEK SINGAPORE PTE LTD [SG]; ZHANG KAI [CN]; AN JICHENG [CN]) 31 December 2014 (2014-12-31)<br>* paragraph [0012]; figure 2 *<br>----- | 6,7, 15-17 | |

The present search report has been drawn up for all claims

1

| Place of search | Date of completion of the search | Examiner |
|---|---|---|
| The Hague | 14 December 2017 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 0276

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2017

| Patent document cited in search report | Publication date | Patent family member(s) | Publication date |
|---|---|---|---|
| WO 2014205665 A1 | 31-12-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- EP 2773122 A1
- US 9332258B B
- EP 16194250 A

### Non-patent literature cited in the description

- **JEAN-BAPTISTE LORENT.** TICO Lightweight Codec Used in IP Networked or in SDI Infrastructure. *SMPTE RDD,* vol. 35, 2016
- **TOSHIAKI KOJIMA.** LLVC - Low Latency Video Codec for Network Transfer. *SMPTE RDD,* 2015, vol. 34
- **J. KIM ; C. M. KYUNG.** A Lossless Embedded Compression Using Significant Bit Truncation for HD Video Coding. *IEEE Transactions on Circuits and Systems for Video Technology,* 2010
- intoPIX Codec Submission for JPEG-XS CfP. *Design Description,* 2016